(19)

**Europäisches Patentamt**
**European Patent Office**
**Office européen des brevets**

(11) **EP 4 369 553 A1**

(12) **EUROPEAN PATENT APPLICATION**

(43) Date of publication:
**15.05.2024 Bulletin 2024/20**

(21) Application number: **22206647.4**

(22) Date of filing: **10.11.2022**

(51) International Patent Classification (IPC):
*H02J 7/00* (2006.01)   *H01F 38/14* (2006.01)
*H02J 50/12* (2016.01)   *H02J 50/40* (2016.01)
*H02J 50/80* (2016.01)   *H02J 50/90* (2016.01)
*H04B 5/00* (2024.01)

(52) Cooperative Patent Classification (CPC):
**H02J 50/12; H01F 38/14; H02J 7/00045;**
**H02J 50/402; H02J 50/80; H02J 50/90; H04B 5/26;**
**H04B 5/79;** H02J 50/60

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **INTEL Corporation**
**Santa Clara, CA 95054 (US)**

(72) Inventors:
• **THAKUR, Jayprakash**
 **560035 Bangalore (IN)**
• **DEV, Rishav**
 **562125 Bangalore (IN)**
• **HEGDE, Mythili**
 **560078 Bangalore (IN)**
• **DAS, Sajal Kumar**
 **560115 Bangalore (IN)**

• **CHINTAMANI, Sarat**
 **560077 Bangalore (IN)**
• **BEKAL MANAMOHAN, Praveen Kumar**
 **Santa Clara, 95054 (US)**
• **R, Aneesh**
 **629175 Thuckalay (IN)**
• **TAMRAKAR, Maruti**
 **490022 Durg (IN)**
• **SANGLE, Parshuram**
 **416234 Kolhapur (IN)**
• **KODANKANDATH, Anoob Anto**
 **Santa Clara, 95054 (US)**
• **PEDDIREDDY, Prathibha**
 **560087 Bengaluru (IN)**
• **PAMMI, Lakshmiravikanth**
 **Santa Clara, 95054 (US)**

(74) Representative: **Viering, Jentschura & Partner mbB**
**Patent- und Rechtsanwälte**
**Am Brauhaus 8**
**01099 Dresden (DE)**

(54) **UNIVERSAL WIRELESS CHARGING PLATFORM AND IMPROVED POWER TRANSFER FOR WIRELESSLY CHARGING BATTERY-POWERED DEVICES**

(57) Disclosed herein are automatically-configuring, universal wireless charging systems, devices, and methods for the efficient wireless transfer of power from a charging platform (310) to a battery of an electronic device (340). The charging system determines whether a proximity status indicates an electronic device is within a predefined charging distance from the charging platform. If so, the charging system automatically determines a charging power profile for a transmission coil for wirelessly charging the device, where the charging power profile is determined based on a wireless handshake protocol between the charging platform and the device to be charged. The charging system also generates a configuration message to control the transmission coil according to the charging power profile.

**EP 4 369 553 A1**

300

340 Divice to be Charged

Wireless Charging
Station/Platform  310

Device placed on the charging platform

Sense
presence
of device

Handshake

Initiate pairing/Request power profile for charging

Send charging profile/parameters
(If no response, use default or manually-entered.)

Configure
platform
based on
profile/
parameters

Start charging; monitor battery level

Stop charging based on charging threshold; notify user

FIG. 3

## Description

### Technical Field

The disclosure relates generally to wirelessly charging battery-powered devices and, in particular, to a wireless charging platform for wirelessly transmitting power to charge a battery of an electronic device.

### Background

Batteries are ubiquitous in today's world of electronic gadgets, where many gadgets are small, portable, and can operate on battery power for many hours. Familiar gadgets include mobile phones, laptops, tablets, Bluetooth headsets, wearables, wireless speakers, etc. Because battery power is limited, however, battery-powered gadgets often provide a mechanism for recharging the batteries. The charging mechanism for each gadget is often unique to each device, where each gadget's rechargeable battery often requires device-specific hardware, such as a specific cable, a specific adapter, or a particular voltage converter that provides a specific voltage, power, current, etc. When a consumer has multiple gadgets and each gadget has its own charging hardware, this may lead to a variety of problems, including inconvenience to consumers and producers, extra costs, and extra waste, because producers must separately supply and individually configure charging hardware with each gadget sold and a consumer must own multiple chargers for multiple devices.

### Brief Description of the Drawings

In the drawings, like reference characters generally refer to the same parts throughout the different views. The drawings are not necessarily to scale, emphasis instead generally being placed upon illustrating the exemplary principles of the disclosure. In the following description, various exemplary aspects of the disclosure are described with reference to the following drawings, in which:

FIG. 1 shows an exemplary a universal wireless charging system for wirelessly charging a battery of an electronic gadget;
FIG. 2 shows an exemplary interaction between a transmission coil and reception coil that may be controlled in a universal wireless charging system to charge a battery;
FIG. 3 illustrates an exemplary sequence diagram of the interaction between a wireless charging platform and a chargeable device in a universal wireless charging system;
FIG. 4 shows an exemplary universal wireless charging system that may include a wireless charging platform and additional, supporting circuitry for a universal wireless charging system;
FIGs. 5A and 5B show examples of a series resonant circuit and a parallel resonance circuit that may be used in a universal wireless charging system;
FIG. 6 shows an example of a series-series combination in a universal wireless charging system;
FIG. 7A and 7B show examples of different radiation/gain patterns for a coil operating in a charging platform and/or a device-to-be-charged;
FIG. 8 illustrates an exemplary schematic drawing of a device that may be used for wirelessly transmitting power from a wireless charging platform to a battery in an electronic gadget; and
FIGs. 9-11 each depict a schematic flow diagram of an exemplary method for wirelessly transmitting power from a wireless charging platform to a battery in an electronic gadget.

### Description

The following detailed description refers to the accompanying drawings that show, by way of illustration, exemplary details and features.

The word "exemplary" is used herein to mean "serving as an example, instance, or illustration." Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc.). The phrase "at least one of' with regard to a group of elements may be used herein to mean at least one element from the group consisting of the elements. For example, the phrase "at least one of' with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (*e.g.*, "plural [elements]", "multiple [elements]") referring to a quantity of elements expressly refers to more than one of the said elements. For instance, the phrase "a plurality" may be understood to include a numerical quantity greater than or equal to two (*e.g.*, two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, *e.g.*, provided as a file, a portion of a file, a set of files, a signal or stream, a portion of a signal or stream, a set of signals or streams, and the like. Further, the term "data" may also be used to mean a reference to information, *e.g.*, in the form of a pointer. The term "data", however, is not limited to the aforementioned examples and may take various forms and represent any information as understood in the art.

The terms "processor" or "controller" as, for example, used herein may be understood as any kind of technological entity (e.g., hardware, software, and/or a combination of both) that allows handling of data. The data may be handled according to one or more specific functions executed by the processor or controller. Further, a processor or controller as used herein may be understood as any kind of circuit, *e.g.*, any kind of analog or digital circuit. A processor or a controller may thus be or include an analog circuit, digital circuit, mixed-signal circuit, software, firmware, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (*e.g.*, a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPoint™, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (*e.g.*, the transmission of radio signals) and logical transmission (*e.g.*, the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both "direct" calculations via a mathematical expression/formula/relationship and 'indirect' calculations via lookup or hash tables and other array indexing or searching operations.

As noted above, battery-operated devices that provide a way to recharge the device's battery often have a unique charging solution that may include device-specific hardware or charging properties, such as a specific cable, a specific adapter, a specific power rating, a specific capacity, and/or a particular voltage converter that provides a specific voltage, power, current, etc. Because of these differences, the charging solution for one battery-operated device may not be compatible with the charging solution for other battery-operated devices. From the perspective of a manufacture or supplier of battery-powered gadgets, there may be significant costs and overhead associated with designing their products so that they could be used with multiple different types of chargers. In addition, if each gadget requires a unique charging solution, there may be extra costs for consumers to purchase, carry, and maintain multiple chargers (e.g., one for each gadget) so that each gadget they carry can be charged if its battery is low or exhausted. Even from the perspective of the manufacturing, supply chain management, etc., there may also be extra costs to manufacture, support, and supply a different charger for each device. In addition, the excessive number of chargers that may be needed to support each gadget is wasteful, impacting e-waste generation and management.

As should be appreciated from the description below, a universal charging platform is disclosed below that may address these problems by providing an auto-configuring, universal wireless charging platform capable of charging any type of battery-powered gadget, irrespective of the differing power requirements/power ratings and independent of any physical connectors, layouts, or charging ports. Currently available wireless charging solutions (for example, portable wireless chargers for ear-pods, smart watches, and smartphones) are inadequate because they still tend to be device-specific, requiring dedicated receptacles, nodes, and/or mechanisms for each individual type of gadget to be charged. Even where multiple devices may be charged on the same wireless charging platform, conventional platforms tend to have a dedicated location or node that is specific to each type of device (e.g., a spot for an ear-pod, a spot for a smart watch, a spot for a smart phone, etc.), and this does not solve the problems discussed above with respect to device-specific chargers. For example, there is often a maximum power capacity (usually less than 20W) associated with each dedicated charging node, and there is no possibility of charging the gadget if its dedicated charging node fails or if a user wants to charge two devices of the same type on conventional platforms. In addition, currently available platforms are not flexible to the power category of the gadget, and some power categories are not supported (e.g., power receiving unit (PRU) category 1, 4, 5, as outlined, for example, in the Alliance for Wireless Power's (A4WP) specification for wireless charging).

In addition to the disclosed universal wireless charging platform, also disclosed below is an implementation for improved efficiency in wireless power transfer between source and target. In conventional wireless charging systems, power transfer is typically achieved through inductive coupling techniques between a transmission (source) coil and a reception (target) coil, providing, for example, 5W of wireless power transfer between coils, as outlined, for example, in the Wireless Power Consortium (WPC) Qi standard (e.g., WPC Qi v1.1). In existing chipsets, such as the bq500212a and bq51050b, the maximum power transfer system level efficiency is about 70% at 10 mm spacing between source coil and target coil. As discussed in more detail below, the disclosed wireless power transfer solution may improve the overall system-level efficiency for the wireless charger.

For example, the disclosed power transfer solution may, using a small target coil at 50 mm spacing (e.g., 0.5 cm distance between transmission coil and reception coil), successfully charge a battery in 1 hour from a dead state to 100% capacity. This type of universal wireless charging platform may be standardized for wireless charging across many different gadget-manufacturers to support any type of battery-powered gadget. In addition, there may be certain advantages to the disclosed universal wireless charging platform, such as user convenience, where a single charger may be utilized by different manufacturers for different types of devices, including laptops, smartphones, tablets, smart watches, earbuds, e-readers, heath monitors, wearables, etc.

The disclosed universal wireless charging platform may also allow for fast, simultaneous charging of multiple devices. The disclosed universal wireless charging platform may also allow for charging of any type of device, without the need to have a unique device-specific charger for each type of device. This may also provide a cost benefit, where the consumer need only purchase one charging device-irrespective of the number of gadgets-as opposed to a device-specific charger for each type of device: This may also provide a cost benefit to manufacturers, where there need not be specific parts to accommodate a unique design for each device-specific charger, significantly reducing the bill of materials cost. In addition, avoiding a device-specific charger for each type of device may have environmental benefits because a single charger can accommodate multiple devices, and e-waste may be reduced, both in terms of generation and maintainability.

In addition, the universal wireless charging platform disclosed below may provide an improved inductive coupling for accomplishing the wireless power transfer. In particular, the wireless charging platform may use resonant charging, which provides a convenient, unobtrusive charging platform for use in locations where space is a premium, such as bedside tables and office desks. The resonant wireless charger disclosed below may improve the efficiency of wireless charging by a combination of resonant circuits in both transmitting and reception coils, by frequency switching for multi-device charging, and/or by using additional metamaterial layers in the transmitter and reception coils to direct the magnetic field in a specific direction.

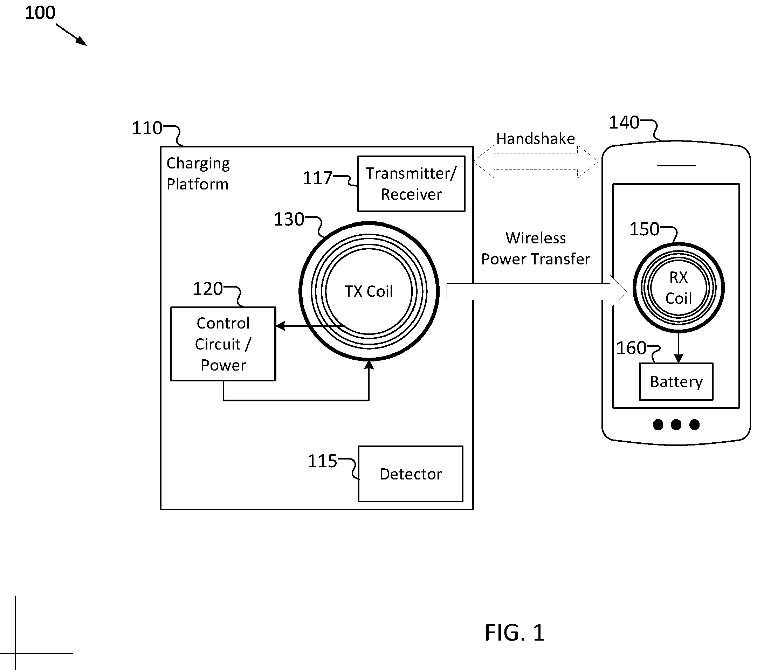

Disclosed herein is a system, method, and apparatus for a universal wireless charging platform, where any type of wirelessly-chargeable gadget may be placed on the platform, and the platform automatically configures itself to charge the gadget with the appropriate charging parameters. An example of such a universal wireless charging system is shown in FIG. 1. The universal wireless charging system 100 of FIG. 1 shows a charging platform 110 that includes a transmission coil 130 (or source coil) that is controlled by and supplied power from a control circuit 120 to transmit wireless power via the transmission coil 130. Gadget 140 (e.g., a smartphone) may include a reception coil 150 (or target coil) that is configured to wirelessly receive a power transfer when placed near a transmission coil (e.g., placed on charging platform 110 near transmission coil 130) and to transfer the received power transfer to charge its battery 160. For ease of visualization and description, the functions of the universal wireless charging system 100 have been described and depicted with respect to their logical groupings (e.g., into a control circuit 120, transmitter/receiver 117, detector 115, etc.), it should be understood that these logical groupings may take other forms, need not be isolated from one another, and may be distributed among one or more processors, circuits, subsystems, etc.

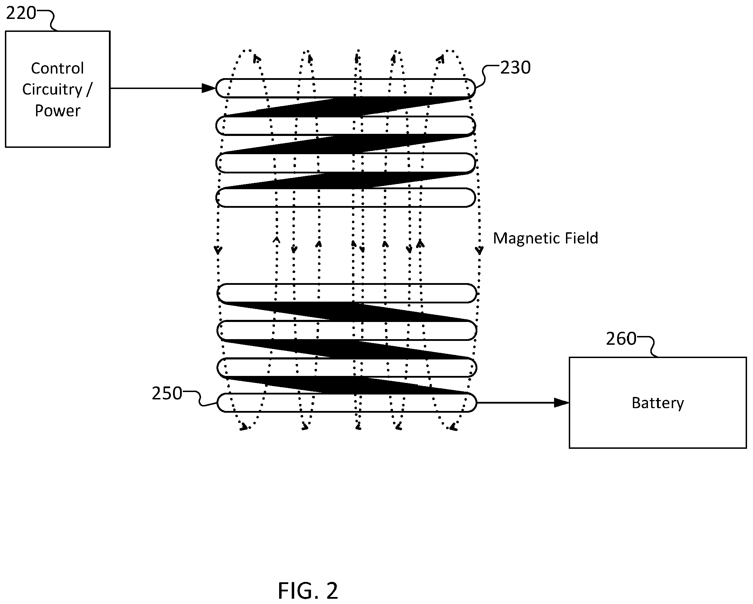

FIG. 2 shows a typical example of how such a system (e.g., universal wireless charging system 100) may wirelessly transfer power from a transmission coil (e.g., transmission coil 230) to a reception coil (e.g. reception coil 250) in order to charge a battery (e.g., battery 260). In such systems, a control circuit 220 may supply power to a transmission coil 230 that creates a magnetic field around the transmission coil 230. When the generated magnetic field is in the proximity of the reception coil 250, it in turn generates a current that flows through the reception coil 250 and charges the attached load (e.g., battery 460).

Returning to FIG. 1, the charging platform 110 may also include a detection circuit (e.g. detector 115) for detecting whether a gadget has been placed on the charging platform 110. The detection circuit may include any type of sensor (e.g., an impedance sensor that detects an impedance change when a gadget (e.g., gadget 140) is placed on or near the charging platform 110; a scale that detects when an additional weight has been added to the charging platform 110); a radar or light sensor that detects the existence and/or a distance of objects from the charging platform; etc.). Once the charging platform 110 detects that an object (e.g., gadget 140) has been placed on or near it, the charging platform 110 may, via a transmitter/receiver 117, attempt to establish a handshake with the object in order to obtain the object's power charging requirements.

The handshake may use near-field communication protocol (e.g., Bluetooth), to request and receive power charging requirements from the object, or the handshake may be accomplished by receiving a Radio Frequency Identifier (RFID) of the object. The charging platform 110 may then use the information gathered during the handshake to configure the transmission coil 130 according to the requirements, e.g., via the control circuit 120. If the handshake is unsuccessful (e.g., if the object is unable to communicate via a handshake protocol (e.g., the battery is too low or dead)), the charging platform 110 may provide a prompt for a user to manually enter the charging parameters or identify the type of device. Or, the charging platform 110 may use a predetermined default charging profile (e.g., a predefined profile) to configure the transmission coil 130. Once the control circuit 120 has configured the transmission coil 130 based on the determined charging parameters, the control circuit 120 may apply power to the transmission coil 130 to initiate the wireless power transfer.

To reduce the risk that a human may absorb some of the radiation emitted by the transmission coil 130, the detector 115 may also include a sensor for detecting whether a human hand is within a predetermined distance (e.g., predefined) of the transmission coil 130 (e.g., within an unsafe radiation zone if the transmission coil 130 is active). If the detector 115 detects that a human body part (e.g., the human hand that may place the gadget onto or remove the gadget from the charging platform 110) is within the predetermined distance, the detector 115 may inform the control circuit 120 to switch off the power to the transmission coil 130 until the human body part is outside of the predetermined distance (e.g., outside the unsafe radiation zone) or adjust the electromagnetic radiation of the transmission coil 130 so that its radiation pattern is redirected away from the detected human body part and/or so that the radiation power is within safety limits (e.g., to meet standards for a specific absorption rate (SAR)).

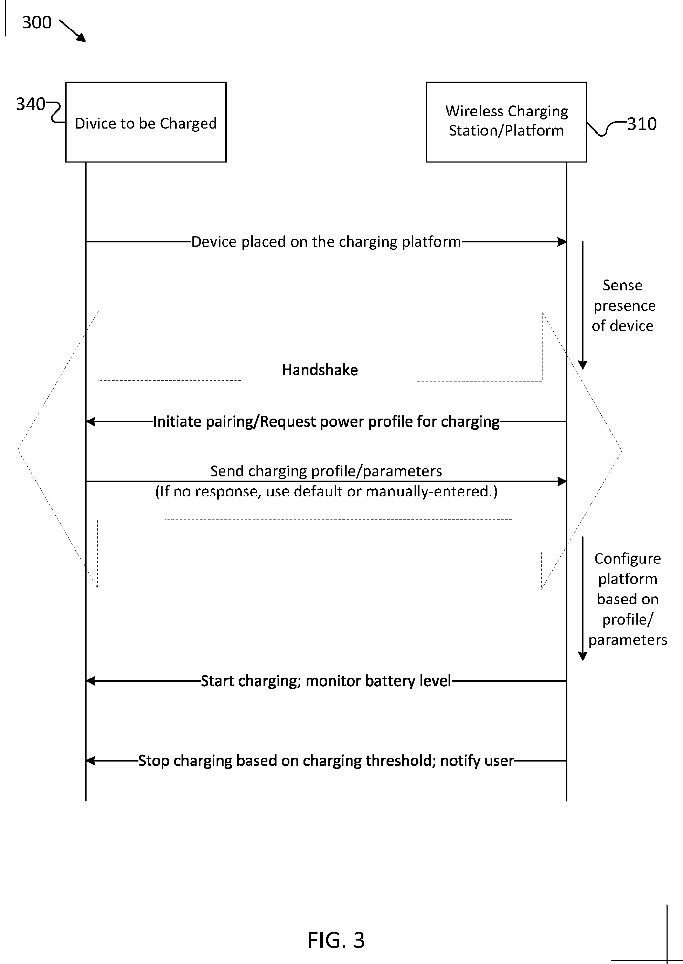

FIG. 3 shows a sequence diagram 300 of how a universal wireless charging system (e.g., universal wireless charging system 100) may automatically configure a wireless charging platform 310 to wirelessly charge a device 340 to be charged (e.g., a battery-powered gadget). First, the device 340 is placed on the charging platform 310. The charging platform 310 then senses (e.g., by an impedance change sensor configured to detect, for example, the metallic reception coil within the device 340) that an object has been placed on the charging platform 310.

Next, the charging platform 310 may initiate a handshake protocol in order to obtain the wireless charging configuration parameters to be used when wirelessly charging the detected object the (e.g., device 340). The handshake protocol may begin by the charging platform 310 sending a power negotiation protocol message that requests a configuration profile for charging the device 340. The power negotiation protocol message request may be sent via a near-field communication protocol (e.g., a Bluetooth protocol) and may be part of a pairing process. In addition, the power negotiation protocol message request may include a random number (RAND) or another identifier that may be used in a response message (e.g., when device 340 responds) so that the charging platform 310 is able to detect and match the respective device to the corresponding request message that was sent. For example, the power negotiation protocol message request may be a broadcast message (e.g., meaning that it is not specifically directed to a particular target device, but rather, is broadcast on a common channel that is available to any device) and it may include the RAND or other identifier within the broadcast message. If device 340 successfully receives the power negotiation protocol message request, device 340 may then respond with a power descriptor file that includes its desired charging profile/charging parameters and the RAND/identifier from the broadcast message. The charging profile/charging parameters may include any information that the charging platform 310 may use to appropriately configure the transmission coil, including, as examples, a power rating, a power level, a power category, a resonant frequency, a maximum charge time, a voltage level, or a current level.

The handshake protocol may also be a more simplified procedure such as an RadioFrequency Identification (RFID) protocol, whereby the charging platform 310 uses an electromagnetic interrogation pulse to cause the device 310 to transmit (e.g., in a RFID message) its charging profile/charging parameters or an object identifier/type from which the charging platform 310 may determine the necessary parameters (e.g., using a look-up table of charging parameters associated with saved identifiers, saved object types, etc.). Such an RFID protocol approach may be preferred, for example, where the device 310 to be charged is in a dead-battery state or its battery is too low that it is unable to use more complex negotiation protocols.

If there is no response to the power negotiation protocol message request and/or the RFID procedure does not return an object identifier/type of the device 310 to be charged, the charging platform 310 may provide a user prompt (e.g., on a display of the charging platform, sent to a computing device that is linked to the charging platform 310, or sent to a user account associated with the charging platform 310) requesting the charging profile/charging parameters and/or object identifier/type from which the charging platform 310 may determine the necessary charging profile/charging parameters. The charging platform 310 may also use a predetermined (e.g., default or predefined) charging profile/charging parameter. As should be appreciated, the default may contain less-than-optimal charging parameters that are sufficient to safely charge any type of device until the device has sufficient power to re-negotiate its desired charging profile/charging parameters according to the handshake protocol.

After the charging platform 310 has determined the charging profile/charging parameters (and, if applicable, has confirmed the associated device using the RAND/identifier), the charging platform controls the transmission coil based on the charging profile/charging parameters (e.g., with reference to FIG. 1, control circuit 120 controls transmission coil 130). As discussed above with respect to FIG. 1, the charging platform 310 may detect whether a human body part is within an unsafe radiation zone and switch off the power to the transmission coil until the human body part is outside of the unsafe radiation zone or adjust the electromagnetic radiation of the transmission coil so that its radiation pattern is redirected away from the detected human body part and/or so that the radiation power is within safety limits (e.g., to meet standards for a specific absorption rate (SAR)).

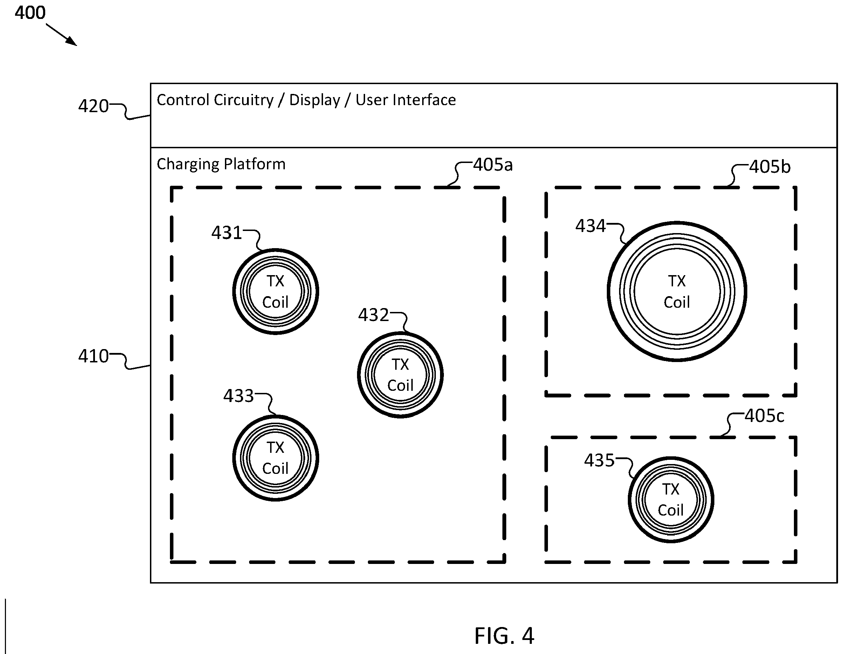

FIG. 4 shows an exemplary universal wireless charging system 400 that may include a wireless charging platform 410 along with additional circuitry 420 (e.g., control circuitry, a user display, and a user interface) that may support the wireless charging system 400. As depicted in FIG. 4, the wireless charging platform 410 may include multiple transmission coils (e.g., transmission coils 431, 432, 433, 434, and 435), and the total area of the charging platform 410 may be logically and/or physically divided into different charging areas that may be configured to charge multiple different devices, where one or more transmission coils within each area may be configured to charge the device in the area. For example, area 405a may be logically configured to include transmission coils 431, 432, and 433, area 405b may be logically configured to include transmission coil 434, and area 405c may be logically configured to include transmission coil 435. As should be appreciated, depending on the device that is placed on the platform (e.g., its size, its type, its charging needs, etc.), the charging platform 410 may reconfigure the areas and transmission coils to optimize the wireless charging of the device. In addition, the charging platform 410 may reconfigure the areas and transmission coils based on the other devices that may have been simultaneously placed on the charging platform 410 to efficiently share the available transmission coils and match the appropriate transmission coils to the needs of the multiple placed devices.

As briefly discussed above with respect to FIG. 2, an inductive wireless charging system typically uses transmission coil(s) (e.g., transmission coil 230) together with reception coil(s) (e.g., reception coil 250). Electrical current is transmitted from the transmission coil 230 to reception coil 250 wirelessly via a magnetic field generated in the transmission coil 230. The generated magnetic field then induces a current in the reception coil 250, which is used to generate a voltage for charging the load (e.g., battery 260) attached to the reception coil 250. Advantageously, inductive charging, such as the charging system shown in FIG. 2, may also be configured for "resonant" charging, which means that the transmission coil and the reception coil oscillate (or "resonate") at the same resonant frequency. Resonant charging may provide for transferring power at greater distances and may provide higher efficiency.

In addition, the use of a resonant frequency allows for selective charging, where the charging platform and the device to be charged may be tuned to the same resonant frequency to selectively charge only those devices that are tuned to the selected resonant frequency. For example, a charging platform with multiple transmission coils may tune one coil (or a set of coils) to a first resonant frequency for charging a first device that is also tuned to that first frequency. The charging platform may then tune another coil (or a set of coils) to a second resonant frequency for charging a second device that is tuned to that second frequency. The different resonant frequencies used in the frequency-paired charging coils helps prevent power sharing between the two devices. As should be appreciated, any of the coils discussed with respect to the universal wireless charging systems above may be designed to be resonant at a resonant frequency.

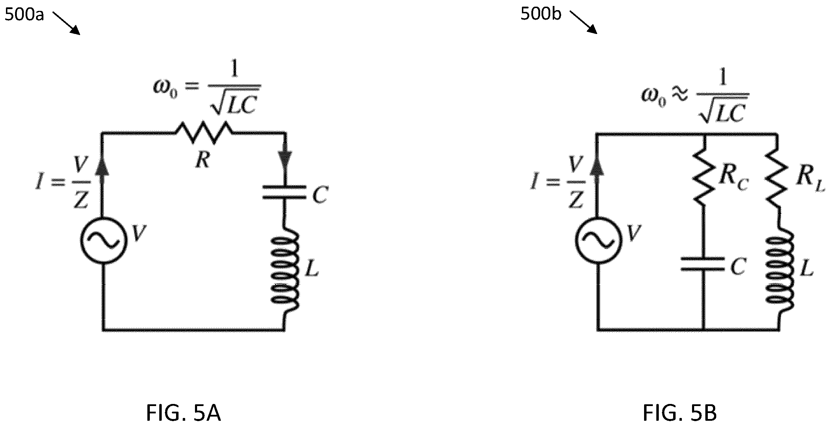

The resonance of a coil may be set by a resonant circuit, and the resonant circuit may be a series resonant circuit or a parallel resonance circuit. FIG. 5A shows one example of a series resonant circuit 500a while FIG. 5B shows one example of a parallel resonance circuit 500b that may be used as a transmission coil with a resonance at a resonant frequency, $\omega_0$. In series resonant circuit 500a, a voltage source $V$ drives a current $I$ across a capacitance $C$ in series with an inductor (coil) $L$ and their associated resistance $R$, where $\omega_0 = \frac{1}{\sqrt{LC}}$. In parallel resonant circuit 500b, the current $I$ drives a capacitance C (and its associated resistance $R_C$) in parallel with the inductor L (and its associated resistance $R_L$), where $\omega_0 \approx \dfrac{1}{\sqrt{LC}}$. A series resonance circuit (e.g., series resonant circuit 500a) has lower impedance at the resonant frequency point, and a parallel resonance circuit (e.g., parallel resonant circuit 500b) has higher impedance at the resonant frequency point. While FIGs. 5A/5B are examples of transmission coils with a resonant frequency, it should be understood that similar series and parallel resonant circuits may be used as reception coils, where the voltage source *V* is replaced by the load (e.g., the battery to be charged) and a current *I* is induced in the inductor *L* by the magnetic field generated by the corresponding transmission coil.

Either type of resonant circuit (e.g., series or parallel) may be used in a combination or pair of coils (e.g., a transmission coil paired with a corresponding reception coil). Depending on the combination, different transfer efficiencies in the coupling between the two circuits may be realized. The chart below lists the various combinations and their corresponding coupling efficiency (k):

| Transmitter Circuit | Receiver Circuit | Coupling, k |
|---|---|---|
| Parallel resonance | Parallel resonance | Good (0.6) |
| Series resonance | Parallel resonance | Middle |
| Parallel resonance | Series resonance | Low |
| Series resonance | Series resonance | Best (0.9) |

As noted in the chart above, a series-series combining (e.g., a transmission coil that uses a series resonant circuit paired with a reception coil that uses a series resonant circuit) may provide higher power transfer efficiency compared to other resonance combination because in the resonance condition, a series resonant circuit shows a low impedance path, allowing maximum current to flow through the coil, which yields the maximum magnetic field in the air.

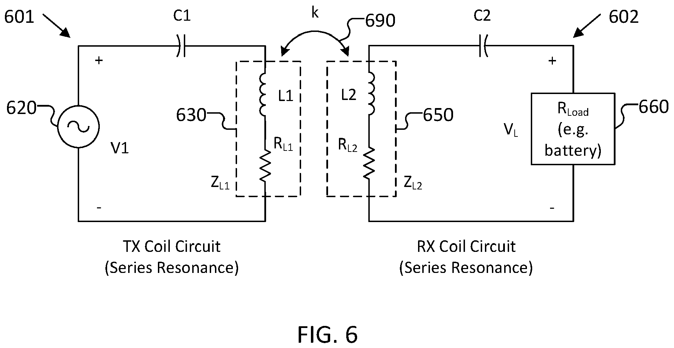

An example of a series-series combining in a wireless charging system is shown in FIG. 6. The transmission coil uses a series resonant circuit 601 to set the resonance, a voltage source 620 (VI) to drive with a current Ii a capacitor C1 in series with an impedance 630 ($Z_{L1}$), where the impedance 630 includes an inductance L1 and a resistance $R_{L1}$. The reception coil uses a series resonant circuit 602 to set the resonance, where the coupling 690 (k) between the transmission coil and reception coil generate a current $I_2$ across an inductance L1 and a resistance $R_{L1}$, that together form an inductance 650 ($Z_{L2}$), which is in series with a capacitor C2 and charges a load 660 ($R_{Load}$) (e.g., a battery of the device to be charged) with a voltage $V_L$.

At series resonance (were $\omega$ is resonance (or operating) frequency) on both the transmission coil and the reception coil, the current transfer gain from series resonant circuit 601 to series resonant circuit 602 (where M21 is mutual coupling) is:

$$\left|\frac{I_2}{I_1}\right| = \frac{\omega M_{21}}{R_2 + R_{Load}}$$

The voltage transfer gain is given by:

$$\left|\frac{V_L}{V_1}\right| = \frac{\omega M_{21} R_{Load}}{R_1 R_2 + R_1 R_{Load} + \omega^2 M_{21}{}^2}$$

As should be appreciated from the above functions for current transfer gain and voltage transfer gain, each of these gains are directly proportional to the mutual inductance and inversely proportional to the impedances of the transmission and reception coils. In cases where series resonance exists on both of the transmission and reception coils, the coupled circuit provides maximum power to the load at maximum transfer gain.

As should be understood, inductive coupling may provide a very high efficiency in the strong coupling region (e.g., where the coupling coefficient k>0.5). For example, the strong coupling region may be the region where the distance between the transmission and reception coils are equal or near to the coil radius (r= 1.414*distance)). On the other hand, resonant coupling may provide a high efficiency in the loosely coupled region (e.g., where the coupling coefficient k<=0.5), but in the strong coupling region (k>0.5), resonant coupling may exhibit degraded power transfer efficiency due to the frequency shift in the resonance of the coil. The frequency shift may increase with mutual inductance (M) and coupling coefficient (k).

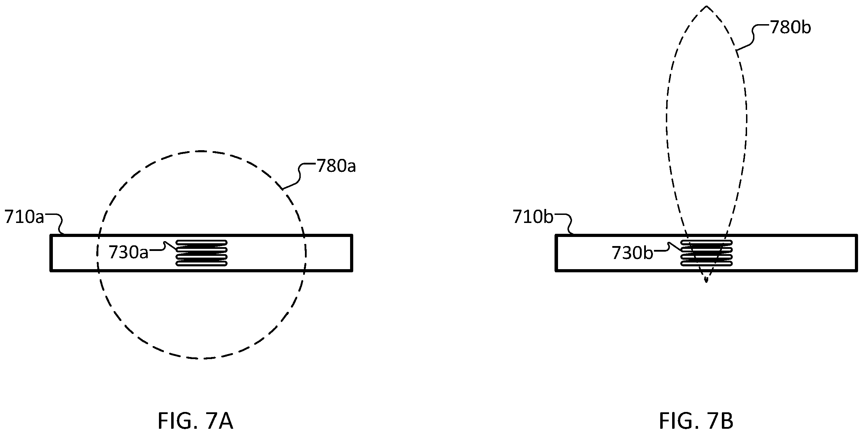

In addition to the option of using a resonant circuit for the transmission/reception coils, any of the coils discussed above may also utilize material layering in the coil to change its radiation pattern (e.g., of a transmission or its gain pattern of a reception) from an isotropic pattern with omnidirectional gain (e.g., uniform gain at a given distance from the center) to a more directed pattern (e.g., non-uniform gain at a given distance, where certain areas experience higher gain and other areas experience lower gain). An example of these differences in radiation/gain patterns are shown by comparing FIG. 7A to FIG. 7B, where FIG. 7A shows a uniform radiation/gain pattern 780a for coil 730a of charging platform 710a and FIG. 7B shows a non-uniform radiation/gain pattern 780b for coil 730b of charging platform 710b.

As can be seen, radiation/gain pattern 780a is substantially uniform in all directions around the coil 730a, including above and below the platform 710a. By contrast, radiation/gain pattern 780b is non-uniform such that there is very little gain directed below platform 710b while there is a very high gain lobe in a narrow area above the platform 710b. A narrower, non-uniform radiation/gain pattern 780b may provide a higher gain in the direction of the high gain lobe and, therefore, improved coupling between transmission coil and reception coil. This may be a more efficient use of power, depending on the design, were it may be wasteful for the coil to have a radiation/gain pattern in certain directions, for example, when the charging platform is designed to rest on a table top so that the device to be charged may be placed on top of the charging platform, but never below it. In such a case, the radiation/gain pattern of 780b may be more advantageous than 780a, because radiation/gain pattern 780b provides a high gain in an area above the platform 710b without wasting energy on providing radiation/gain pattern below the platform 710b (e.g., wasted "back" radiation/gain on the unused side of the platform, as is done with radiation/gain pattern 780a and platform 710a).

One way of adjusting the directivity of the radiation/gain pattern of a coil is to use one or more a metamaterial layer in the layer stack of the coil. In conventional wireless charging platform that use coils with an omni-directional radiation/gain pattern, the coils may be backed by a ferrite sheet and metal plate to avoid back radiation on the unused side of a charging platform (e.g., on the underside of a charging platform that is not intended to receive a device to be charged). But this technique merely shields the back side from radiation, potentially wasting power and failing to improve the gain or directivity in the space above charging platform. Rather than simply shielding unutilized back radiation, an improved layered stack may be used to redirect the radiation/gain pattern of the coil to the top side of the charging platform, where the improved layer stack uses additional metamaterial layers. A "director" layer allows the signal to pass through and a "reflector" layer reverts most of signals back towards source (e.g., to the transmitting coil). Collectively, use of the director layer and the reflector layer allow the beam pattern to be directively shaped (e.g., in a lobe pattern). The "director" layer may also be understood as Fabri-parrot or superstrate, and a "reflector" layer may also be understood as an Artificial Magnetic Conductor (AMC) or High Impedance Surface (HIS) or Electromagnetic Band Gap (EBG) layer.

An exemplary layer stack-up that uses additional metamaterial layers is shown in the table below, where a conventional layer stack (e.g., one that only shields radiation) is compared to an improved layer stack (e.g., one that redirects the radiation/gain pattern to be located primarily above the platform, similar to that shown in FIG. 7B).

| Layer | Conventional Stack (shielded back radiation) | Improved Stack (directive radiation pattern) |
|---|---|---|
| Layer 1 | PVC Protective Layer | PVC Protective Layer |
| Layer 2 | Coil Winding | Superstrate Metamaterial (Director) |
| Layer 3 | Adhesive | Coil Winding |
| Layer 4 | Ferri te | Adhesive |
| Layer 5 | Aluminum Plate | Artificial Magnetic Conductor Metamaterial (Reflector) |
| Layer 6 | PVC Base Layer | Aluminum Plate |
| Layer 7 | - | PVC Base Layer |

As should be appreciated, the above-listed improved layer stack is not limiting, and any number of layers with any stack-up may be used to provide the desired radiation/gain pattern of the coil. As should also be appreciated, the exemplary radiation/gain patterns discussed above are not limiting, and any radiation/gain patterns may be employed, depending on design considerations such as the intended placement location of the device to be charged, the intended size of the charging area, the intended number of charging locations, the number of coils, etc. An advantage of the above-listed improved layer stack is that the thickness of the layers and the manufacturing process need to change from that required to form the conventional layer stack.

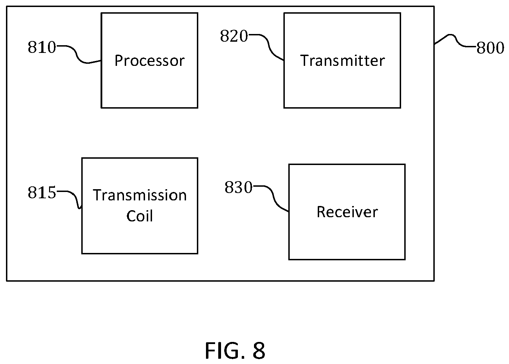

FIG. 8 shows an example of device 800 for use in a wireless charging system that wirelessly transmits power from a wireless charging platform to a battery in an electronic gadget. Without limitation, device 800 may implement any of the features described above with reference to the disclosed universal wireless charging system (e.g., with respect to universal wireless charging system 100, sequence diagram 300, universal wireless charging system 400, and/or FIGs. 1-7). FIG. 8 may be implemented as a device, a system, a method, and/or a computer readable medium that, when executed, performs any of the features of the wireless charging systems described above. It should be appreciated that device 800 is merely exemplary, and this example is not intended to limit any part of universal wireless charging system 100, sequence diagram 300, universal wireless charging system 400, etc.

Device 800 includes a processor 810 that is configured to determine, if a proximity status indicates an object is within a predefined charging distance from a wireless charging platform, a charging configuration for wirelessly charging the object, wherein the charging configuration is determined based on a wireless handshake protocol between the device and the object. Processor 810 is configured to generate a power configuration message to configure the wireless charging platform (e.g. its transmission coil 815) according to the charging configuration for the obj ect. In addition to or in combination with any of the features described in this or the following paragraphs, the wireless handshake protocol may include processor 810 configured to receive an object identifier of the object and to determine one or more charging requirements for the object based on the object identifier.

Furthermore, in addition to or in combination with any one of the features of this and/or the preceding paragraph with respect to device 800, the object identifier may include a Radio Frequency Identification (RFID) message, wherein the handshake protocol may further include the wireless charging platform configured to transmit (e.g., via an RFID circuit) an electromagnetic interrogation pulse, wherein the electromagnetic interrogation pulse is configured to cause the object to transmit the RFID message to the wireless charging platform. Furthermore, in addition to or in combination with any one of the features of this and/or the preceding paragraph, the object identifier may include a medium access control address (MAC ID) that uniquely identifies the object. Furthermore, in addition to or in combination with any one of the features of this and/or the preceding paragraph, the wireless charging platform may include a transmission coil 815 for wirelessly transmitting power to a reception coil of the object. Furthermore, in addition to or in combination with any one of the features of this and/or the preceding paragraph, wherein the wireless handshake protocol may include processor 810 further configured to wirelessly transmit (e.g., via transmitter 820) a broadcast message requesting the charging configuration and processor 810 may be further configured to wirelessly receive (e.g., via receiver 830) a response message from the object, wherein the response message includes the charging configuration.

Furthermore, in addition to or in combination with any one of the features of this and/or the preceding two paragraphs with respect to device 800, the broadcast message may include a number (e.g., a random number) that uniquely identifies the object from other objects within the predefined distance to the wireless charging platform. Furthermore, in addition to or in combination with any one of the features of this and/or the preceding two paragraphs, the response message may further include the number. Furthermore, in addition to or in combination with any one of the features of this and/or the preceding two paragraphs, the broadcast message may include a descriptor table of one or more charging requirements of the charging configuration, wherein the response message may include the one or more charging requirements for the object or an object identifier that uniquely identifies the object. Furthermore, in addition to or in combination with any one of the features of this and/or the preceding two paragraphs, the one or more charging requirements may include at least one of a power rating, a power level, a power category, a resonant frequency, a maximum charge time, a voltage level, or a current level. Furthermore, in addition to or in combination with any one of the features of this and/or the preceding two paragraphs, device 800 may further include a wireless transceiver (e.g., formed of transmitter 820 and receiver 830), wherein processor 810 configured to transmit the broadcast message and to receive the response message may include the wireless transceiver configured to wirelessly transmit via the transceiver (e.g. via transmitter 820) the broadcast message and to wirelessly receive via the transceiver (e.g., via receiver 830) the response message. Furthermore, in addition to or in combination with any one of the features of this and/or the preceding two paragraphs, the wireless transceiver may be configured to operate according to a near-field communication protocol (e.g., Bluetooth) and the response message includes a profile of the object (e.g., a Bluetooth profile).

Furthermore, in addition to or in combination with any one of the features of this and/or the preceding three paragraphs, processor 810 may be further configured to receive an indication of whether a body part is within a predefined radiation distance from the wireless charging platform. Furthermore, in addition to or in combination with any one of the features of this and/or the preceding three paragraphs, processor 810 may be further configured to revise the power configuration message with a charging adjustment to the charging configuration based on the indication. Furthermore, in addition to or in combination with any one of the features of this and/or the preceding three paragraphs, the body part may include a human hand. Furthermore, in addition to or in combination with any one of the features of this and/or the preceding three paragraphs, the charging adjustment may include a reduction in a charging power for the wireless charging platform.

Furthermore, in addition to or in combination with any one of the features of this and/or the preceding four paragraphs with respect to device 800, the wireless handshake protocol may include processor 810 further configured to receive the charging configuration as a manual configuration information from a user of the wireless charging platform. Furthermore, in addition to or in combination with any one of the features of this and/or the preceding four paragraphs, wherein the power configuration message includes a resonance frequency associated with a series resonance circuit of a transmitter coil 815 of the wireless charging platform.

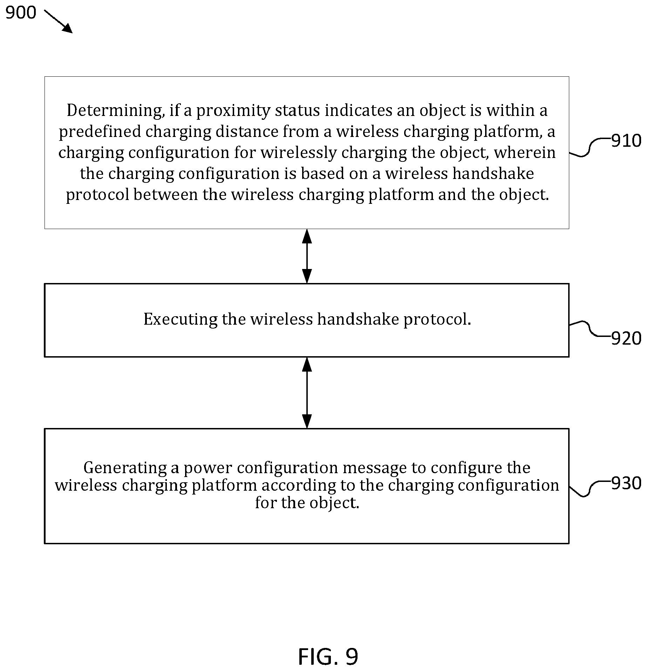

FIGs. 9-11 each depict a schematic flow diagram of a method (e.g., method 900, method 1000, method 1100) for wireless charging batteries of electronic gadgets. Method 900, method 1000, and method 1100 may implement any of the features described above with reference to the disclosed universal wireless charging systems (e.g., with respect to universal wireless charging system 100, sequence diagram 300, universal wireless charging system 400, device 800, and/or FIGs. 1-8).

With respect to FIG. 9, method 900 includes, in 910, determining, if a proximity status indicates an object is within a predefined charging distance from a wireless charging platform, a charging configuration for wirelessly charging the object, wherein the charging configuration is based on a wireless handshake protocol between the wireless charging platform and the object. Method 900 also includes, in 920, executing the wireless handshake protocol. Method 900 also includes, in 930, generating a power configuration message to configure the wireless charging platform according to the charging configuration for the object.

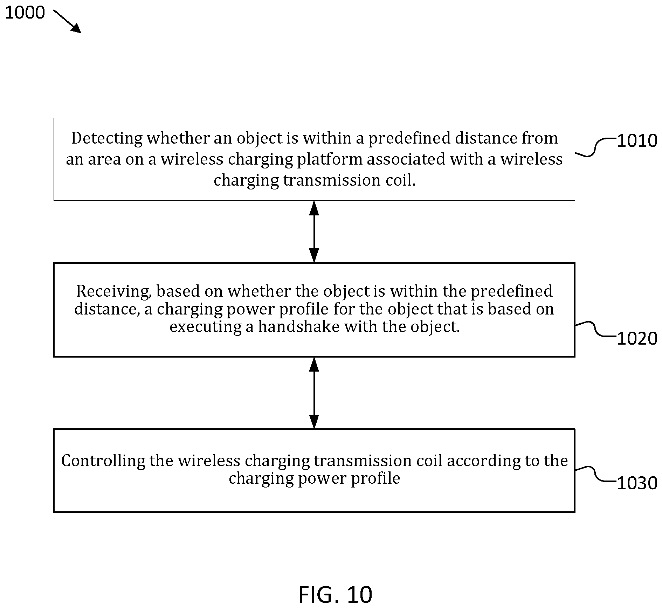

With respect to FIG. 10, method 1000 includes, in 1010, detecting whether an object is within a predefined distance from an area on a wireless charging platform associated with a wireless charging transmission coil. Method 1000 also includes, in 1020, receiving, based on whether the object is within the predefined distance, a charging power profile for the object that is based on executing a handshake with the object. Method 1000 also includes, in 1030, controlling the wireless charging transmission coil according to the charging power profile.

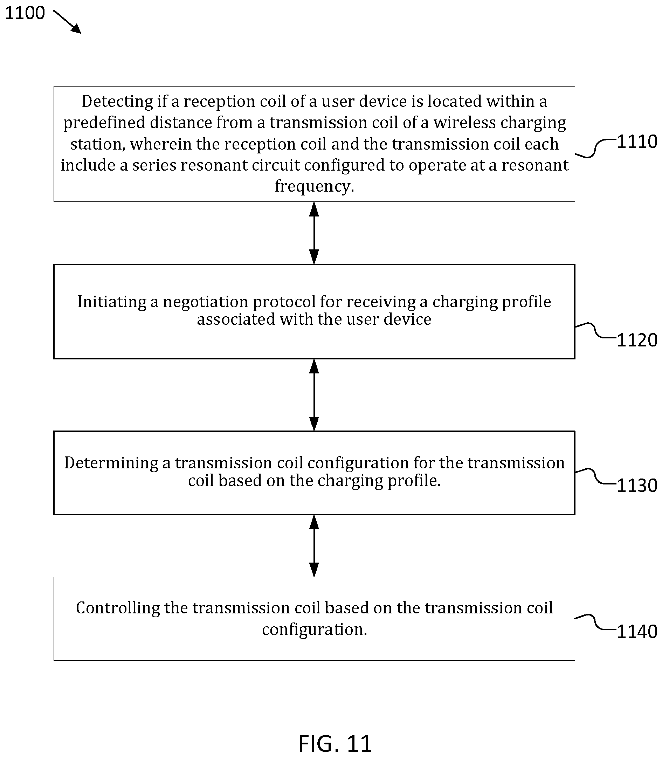

With respect to FIG. 11, method 1100 is for wirelessly charging a chargeable battery of a user device. Method 1100 includes, in 1110, detecting if a reception coil of the user device is located within a predefined distance from a transmission coil of a wireless charging station, wherein the reception coil and the transmission coil each include a series resonant circuit configured to operate at a resonant frequency. Method 1100 also includes, in 1120, initiating a negotiation protocol for receiving a charging profile associated with the user device. Method 1100 also includes, in 1130, determining a transmission coil configuration for the transmission coil based on the charging profile. Method 1100 also includes, in 1140, controlling the transmission coil based on the transmission coil configuration.

In the following, various examples are provided that may include one or more aspects described above with reference to features of the disclosed universal wireless charging systems above (e.g., with respect to universal wireless charging system 100, sequence diagram 300, universal wireless charging system 400, device 800, method 900, method 1000, method 1100, and/or FIGs. 1-11). The examples provided in relation to the devices may apply also to the described method(s), and vice versa.

Example 1 is a device including a processor configured to determine, if a proximity status indicates an object is within a predefined charging distance from a wireless charging platform, a charging configuration for wirelessly charging the object, wherein the charging configuration is determined based on a wireless handshake protocol between the device and the object. The processor is also configured to generate a power configuration message to configure the wireless charging platform according to the charging configuration for the object.

Example 2 is the device of example 1, wherein the wireless handshake protocol includes the processor configured to receive an object identifier of the object and to determine one or more charging requirements for the object based on the object identifier.

Example 3 is the device of example 2, wherein the object identifier includes a Radio Frequency Identification (RFID) message, wherein the handshake protocol further includes the wireless charging platform configured to transmit (e.g., via an RFID circuit) an electromagnetic interrogation pulse, wherein the electromagnetic interrogation pulse is configured to cause the object to transmit the RFID message to the wireless charging platform.

Example 4 is the device of either one of examples 2 or 3, wherein the object identifier includes a medium access control address (MAC ID) that uniquely identifies the obj ect.

Example 5 is the device of any one of examples 2 to 4, wherein the wireless charging platform includes a transmission coil for wirelessly transmitting power to a reception coil of the object.

Example 6 is the device of any one of examples 3 to 5, wherein the wireless handshake protocol includes the processor further configured to wirelessly transmit a broadcast message requesting the charging configuration. The processor is also further configured to wirelessly receive a response message from the object, wherein the response message includes the charging configuration.

Example 7 is the device of example 6, wherein the broadcast message includes a number (e.g., a random number) that uniquely identifies the object from other objects within the predefined distance to the wireless charging platform.

Example 8 is the device of example 7, wherein the response message further includes the number.

Example 9 is the device of any one of examples 6 to 8, wherein the broadcast message includes a descriptor table of one or more charging requirements of the charging configuration, wherein the response message includes the one or more charging requirements for the object or an object identifier that uniquely identifies the object.

Example 10 is the device of example 9, wherein the one or more charging requirements includes at least one of a power rating, a power level, a power category, a resonant frequency, a maximum charge time, a voltage level, or a current level.

Example 11 is the device of any one of examples 6 to 10, wherein the device further includes a wireless transceiver, wherein the processor configured to transmit the broadcast message and to receive the response message includes the wireless transceiver configured to wirelessly transmit via the transceiver the broadcast message and to wirelessly receive via the transceiver the response message.

Example 12 is the device of example 11, wherein the wireless transceiver is configured to operate according to a near-field communication protocol (e.g., Bluetooth) and the response message includes a profile of the object (e.g., a Bluetooth profile).

Example 13 is the device of any one of examples 1 to 12, wherein the processor is further configured to receive an indication of whether a body part is within a predefined radiation distance from the wireless charging platform. The processor is also further configured to revise the power configuration message with a charging adjustment to the charging configuration based on the indication.

Example 14 is the device of example 13, wherein the body part includes a human hand.

Example 15 is the device of either one of examples 13 or 14, wherein the charging adjustment includes a reduction in a charging power for the wireless charging platform.

Example 16 is the device of any one of examples 1 to 15, wherein the wireless handshake protocol includes the processor further configured to receive the charging configuration as a manual configuration information from a user of the wireless charging platform.

Example 17 is the device of any one of examples 1 to 16, wherein the power configuration message includes a resonance frequency associated with a series resonance circuit of a transmitter coil of the wireless charging platform.

Example 18 is a wireless charging platform including a wireless charging transmission coil associated with an area of the wireless charging platform. The wireless charging platform also includes a proximity detector configured to detect whether an object is within a predefined distance from the area of the wireless charging transmission coil. The wireless charging platform also includes a wireless transceiver configured to, based on whether the object is within the predefined distance, receive a charging power profile for the object that is based on a handshake with the object. The wireless charging platform also includes a control circuit configured to control the wireless charging transmission coil according to the charging power profile.

Example 19 is the wireless charging platform of example 18, wherein the handshake includes a communication protocol for communication between the wireless charging platform and the object, wherein the communication includes the wireless charging platform configured to broadcast a request for the charging power profile and to receive at least one charging requirement of the charging power profile that is responsive to the request.

Example 20 is the wireless charging platform of example 19, wherein the request includes a number (e.g., a random number) that uniquely identifies the object from other objects within the predefined distance to the wireless charging platform.

Example 21 is the wireless charging platform of either of examples 18 or 20, wherein the at least one charging requirement further includes the number.

Example 22 is the wireless charging platform of any one of examples 18 to 21, wherein the proximity detector is configured to detect whether the object is within the predefined distance from the area based on an impedance change.

Example 23 is the wireless charging platform of any one of examples 18 to 22, wherein the wireless charging transmission coil is one of a plurality of wireless charging transmission coils and the area is one of a plurality of charging areas, wherein each one of the plurality of charging areas corresponds to at least one of the plurality of wireless charging transmission coils.

Example 24 is the wireless charging platform of example 23, wherein the wireless charging platform further including a sensor configured to detect which of the plurality of charging areas is the area where the object is within the predefined distance.

Example 25 is the wireless charging platform of any one of examples 18 to 24, wherein the charging power profile includes one or more charging requirements or wherein the wireless charging platform is configured to determine the one or more charging requirements based on the charging power profile.

Example 26 is the wireless charging platform of example 25, wherein the one or more charging requirements includes at least one of a power rating, a power level, a power category, a resonant frequency, a maximum charge time, a voltage level, or a current level.

Example 27 is the wireless charging platform of any one of examples 18 to 26, wherein the wireless transceiver is configured to operate according to a near-field communication protocol (e.g., Bluetooth) to receive the charging profile in a response message, wherein the response message includes a profile of the object (e.g., a Bluetooth profile).

Example 28 is the wireless charging platform of any one of examples 18 to 27, wherein the wireless charging transmission coil includes a series resonance circuit with a resonance at an operating frequency.

Example 29 is the wireless charging platform of any one of examples 18 to 28, wherein the wireless charging transmission coil includes a multi-layer coil that directs a radiation pattern of the wireless charging transmission coil.

Example 30 is the wireless charging platform of example 29, wherein the radiation pattern is a non-uniform radiation pattern configured to direct more radiation towards the area than is directed away from the area.

Example 31 is the wireless charging platform of either of examples 29 or 30, wherein the multi-layer coil includes at least one metamaterial layer.

Example 32 is the wireless charging platform of example 31, wherein the at least one metamaterial layer is between a protective layer and a coil winding layer or between an adhesive layer and a metallic plate layer.

Example 33 is the wireless charging platform of either of examples 31 or 32, wherein the multi-layer coil includes a protective layer, a first metamaterial layer, a coil winding layer, an adhesive layer, a second metamaterial layer, a metallic plate layer, and a base layer.

Example 34 is the wireless charging platform of example 33, wherein the protective layer is disposed over the first metamaterial layer, the first metamaterial layer is disposed over the coil winding layer, the coil winding layer is disposed over the adhesive layer, the adhesive layer is disposed over the second metamaterial layer, the second metamaterial layer is disposed over the metallic plate layer, and the metallic plate layer is disposed over the base layer.

Example 35 is the wireless charging platform of any one of examples 18 to 34, wherein the charging power profile includes an object identifier of the object, wherein the control circuit is further configured to determine one or more charging requirements for the object based on the object identifier, wherein the control circuit is further configured to control the wireless charging transmission coil according to the one or more charging requirements.

Example 36 is the wireless charging platform of example 35, wherein the object identifier includes a Radio Frequency Identification (RFID) message, wherein the handshake further includes the wireless transceiver configured to transmit (e.g., via an RFID subcircuit) an electromagnetic interrogation pulse, wherein the electromagnetic interrogation pulse is configured to cause the object to transmit the RFID message to the wireless charging platform.

Example 37 is the wireless charging platform of either one of examples 35 or 36, wherein the object identifier includes a medium access identifier (MAC ID) that uniquely identifies the object.

Example 38 is the wireless charging platform of any one of examples 18 to 37, wherein the proximity detection circuit is further configured to determine an indication of whether a body part is within a predefined radiation distance from the wireless charging platform, wherein the control circuit is further configured to revise the power configuration message with a charging adjustment to the charging configuration based on the indication.

Example 39 is the wireless charging platform of example 38, wherein the body part includes a human hand.

Example 40 is the wireless charging platform of example 38, wherein the charging adjustment includes a reduction in a charging power for the wireless charging transmission coil.

Example 41 is the wireless charging platform of any one of examples 18 to 40, wherein the handshake includes the wireless transceiver further configured to receive the charging power profile as a manual configuration information from a user of the wireless charging platform.

Example 42 is the wireless charging platform of any one of examples 18 to 41, wherein the power configuration message includes a resonance frequency associated with a series resonance circuit of a transmitter coil of the wireless charging platform.

Example 43 is a wireless charging system including a wireless charging station including a transmission coil. The wireless charging system also includes a user device including a wireless a reception coil and a chargeable battery, wherein if the reception coil is located within a predefined distance from the transmission coil, the wireless charging station is configured to initiate a negotiation protocol to receive a charging profile associated with the user device. The wireless charging station is further configured to determine a transmission coil configuration for the transmission coil based on the charging profile and to control the transmission coil based on the transmission coil configuration, wherein the transmission coil and the reception coil each include a resonant series circuit configured to operate at a resonate frequency.

Example 44 is the wireless charging system of example 43, wherein the wireless charging station configured to control the transmission coil based on the transmission coil configuration includes the wireless charging station configured to control a transmission power of the transmission coil according to the transmission coil configuration in order to deliver power to the reception coil of the user device.

Example 45 is the wireless charging system of any one of examples 43 to 44, wherein the negotiation protocol includes the wireless charging platform configured to broadcast a request for receiving the charging profile and to determine at least one charging requirement for the user device based on the charging profile.

Example 46 is the wireless charging system of example 45, wherein the request includes a number (e.g., a random number) that uniquely identifies the user device.

Example 47 is the wireless charging system of any one of examples 46 to 46, wherein the charging profile further includes the number.

Example 48 is the wireless charging system of any one of examples 43 to 47, wherein the wireless charging station further includes a proximity detector configured to detect whether the user device is within a predefined distance from the wireless charging station based on an impedance change.

Example 49 is the wireless charging system of any one of examples 43 to 48, wherein the charging transmission coil is one of a plurality of transmission coils, each associated with at least one of a plurality of charging areas.

Example 50 is the wireless charging system of example 49, wherein the wireless charging station further includes a sensor configured to detect which area of the plurality of charging areas is the area in which the user device is within the predefined distance.

Example 51 is the wireless charging system of any one of examples 46 to 50, wherein the at least one charging requirement includes at least one of a power rating, a power level, a power category, a resonant frequency, a maximum charge time, a voltage level, or a current level.

Example 52 is the wireless charging system of any one of examples 43 to 51, wherein the wireless charging station further includes a wireless transceiver, wherein the wireless charging station configured to initiate the negotiation protocol includes the wireless transceiver configured to operate according to a near-field communication protocol (e.g., Bluetooth) to receive the charging profile in a response message, and wherein the response message includes a profile of the object (e.g., a Bluetooth profile).

Example 53 is the wireless charging system of any one of examples 43 to 52, wherein the transmission coil and/or the reception coil includes a series resonance circuit with a resonance at an operating frequency.

Example 54 is the wireless charging system of any one of examples 43 to 53, wherein the transmission coil includes a multi-layer transmission coil that directs a radiation pattern of the transmission coil and/or the reception coil includes a multi-layer reception coil that directs a gain pattern of the reception coil.

Example 55 is the wireless charging system of example 54, wherein the radiation pattern is a non-uniform radiation pattern configured to direct more radiation towards the user device than is directed away from the user device and/or the gain pattern is a non-uniform gain pattern configured to gain more radiation in a direction of the transmission coil than is directed away from the direction.

Example 56 is the wireless charging system of either of examples 54 or 55, wherein the multi-layer transmission coil and/or multi-layer reception coil includes at least one metamaterial layer.

Example 57 is the wireless charging system of example 56, wherein the at least one metamaterial layer is between a protective layer and a coil winding layer or between an adhesive layer and a metallic plate layer.

Example 58 is the wireless charging system of either of examples 56 or 57, wherein the multi-layer transmission coil and/or multi-layer reception coil includes a protective layer, a first metamaterial layer, a coil winding layer, an adhesive layer, a second metamaterial layer, a metallic plate layer, and a base layer.

Example 59 is the wireless charging system of example 58, wherein the protective layer is disposed over the first metamaterial layer, the first metamaterial layer is disposed over the coil winding layer, the coil winding layer is disposed over the adhesive layer, the adhesive layer is disposed over the second metamaterial layer, the second metamaterial layer is disposed over the metallic plate layer, and the metallic plate layer is disposed over the base layer.

Example 60 is the wireless charging system of any one of examples 63 to 59, wherein the charging profile includes an object identifier of the user device, wherein the wireless charging station is further configured to determine the transmission coil configuration based on the object identifier.

Example 61 is the wireless charging system of example 60, wherein the object identifier includes a Radio Frequency Identification (RFID) message, wherein the negotiation protocol further includes the wireless transceiver configured to transmit (e.g., via an RFID subcircuit) an electromagnetic interrogation pulse, wherein the electromagnetic interrogation pulse is configured to cause the user device to transmit the RFID message as the charging profile to the wireless charging platform.

Example 62 is the wireless charging system of either one of examples 60 or 61, wherein the object identifier includes a medium access control address (MAC ID) that uniquely identifies the user device.

Example 63 is the wireless charging system of any one of examples 43 to 62, wherein the wireless charging station further includes a proximity detection circuit configured to determine an indication of whether a body part is within a predefined radiation distance from the wireless charging station, wherein wireless charging station further includes a control circuit configured to revise the transmission coil configuration with a charging adjustment to the transmission coil configuration based on the indication.

Example 64 is the wireless charging system of example 63, wherein the body part includes a human hand.

Example 65 is the wireless charging system of either one of examples 63 or 64, wherein the charging adjustment includes a reduction in a charging power of the transmission coil.

Example 66 is the wireless charging system of any one of examples 43 to 65, wherein the negotiation protocol includes the wireless charging station configured to receive the charging profile as a manual configuration information from a user of the wireless charging station and/or user device.

Example 67 is the wireless charging system of any one of examples 43 to 66, wherein the transmission coil configuration includes a resonance frequency associated with a series resonance circuit of the transmitter coil and/or of the reception coil.

Example 68 is a method comprising determining, if a proximity status indicates an object is within a predefined charging distance from a wireless charging platform, a charging configuration for wirelessly charging the object, wherein the charging configuration is based on a wireless handshake protocol between the wireless charging platform and the object. The method also includes executing the wireless handshake protocol. The method also includes generating a power configuration message to configure the wireless charging platform according to the charging configuration for the object.

Example 69 is the method of example 68, wherein the executing the wireless handshake protocol includes receiving an object identifier of the object and determining one or more charging requirements for the object based on the object identifier.

Example 70 is the method of example 69, wherein the object identifier includes a Radio Frequency Identification (RFID) message, wherein the executing the handshake protocol further includes transmitting (e.g., via an RFID circuit) an electromagnetic interrogation pulse, wherein the electromagnetic interrogation pulse is configured to cause the object to transmit the RFID message to the wireless charging platform.

Example 71 is the method of either one of examples 69 or 70, wherein the object identifier includes a medium access control address (MAC ID) that uniquely identifies the obj ect.

Example 72 is the method of any one of examples 69 to 71, wherein the wireless charging platform includes a transmission coil, wherein the method further includes wirelessly transmitting power to a reception coil of the object.

Example 73 is the method of any one of examples 70 to 72, wherein executing the wireless handshake protocol includes wirelessly transmitting a broadcast message requesting the charging configuration. The executing the wireless handshake protocol further includes wirelessly receiving a response message from the object, wherein the response message includes the charging configuration.

Example 74 is the method of example 73, wherein the broadcast message includes a number (e.g., a random number) that uniquely identifies the object from other objects within the predefined distance to the wireless charging platform.

Example 75 is the method of example 74, wherein the response message further includes the number.

Example 76 is the method of any one of examples 73 to 75, wherein the broadcast message includes a descriptor table of one or more charging requirements of the charging configuration, wherein the response message includes the one or more charging requirements for the object or an object identifier that uniquely identifies the object.

Example 77 is the method of example 76, wherein the one or more charging requirements includes at least one of a power rating, a power level, a power category, a resonant frequency, a maximum charge time, a voltage level, or a current level.

Example 78 is the method of any one of examples 73 to 77, the method further including a wireless transceiver, wherein wirelessly transmitting the broadcast message and wirelessly receiving the response message comprises wirelessly transmitting and wirelessly receiving via the transceiver.

Example 79 is the method of example 78, wherein the wirelessly transmitting and the wirelessly receiving comprises operating according to a near-field communication protocol (e.g., Bluetooth), wherein the response message includes a profile of the object (e.g., a Bluetooth profile).

Example 80 is the method of any one of examples 68 to 79, the method further comprising receiving an indication of whether a body part is within a predefined radiation distance from the wireless charging platform. The method also includes revising the power configuration message by making a charging adjustment to the charging configuration based on the indication.

Example 81 is the method of example 80, wherein the body part includes a human hand.

Example 82 is the method of either one of examples 80 or 81, wherein making the charging adjustment includes reducing a charging power for the wireless charging platform.

Example 83 is the method of any one of examples 68 to 82, wherein executing the wireless handshake protocol further includes receiving the charging configuration as a manual configuration information from a user of the wireless charging platform.

Example 84 is the method of any one of examples 68 to 83, wherein the power configuration message includes a resonance frequency associated with a series resonance circuit of a transmitter coil of the wireless charging platform.

Example 85 is a method for wirelessly charging that includes detecting whether an object is within a predefined distance from an area on a wireless charging platform associated with a wireless charging transmission coil. The wireless charging method also includes receiving, based on whether the object is within the predefined distance, a charging power profile for the object that is based on executing a handshake with the object. The wireless charging method also includes controlling the wireless charging transmission coil according to the charging power profile.

Example 86 is the method of example 85, wherein executing the handshake includes executing a communication protocol for communication between the wireless charging platform and the object, wherein executing the communication protocol includes broadcasting a request for the charging power profile and receiving at least one charging requirement of the charging power profile that is responsive to the request.

Example 87 is the method of example 86, wherein the request includes a number (e.g., a random number) that uniquely identifies the object from other objects within the predefined distance to the wireless charging platform.

Example 88 is the method of either of examples 85 or 87, wherein the charging requirement further includes the number.

Example 89 is the method of any one of examples 85 to 88, the method further including detecting whether the object is within the predefined distance from the area based on determining an impedance change.

Example 90 is the method of any one of examples 85 to 89, wherein the wireless charging transmission coil is one of a plurality of wireless charging transmission coils and the area is one of a plurality of charging areas, wherein each one of the plurality of charging areas corresponds to at least one of the plurality of wireless charging transmission coils.

Example 91 is the method of example 90, the method further including detecting (e.g., via a sensor) which of the plurality of charging areas is the area where the object is within the predefined distance.

Example 92 is the method of any one of examples 85 to 91, wherein the charging power profile includes one or more charging requirements or the method further includes determining the one or more charging requirements based on the charging power profile.

Example 93 is the method of example 92, wherein the one or more charging requirements includes at least one of a power rating, a power level, a power category, a resonant frequency, a maximum charge time, a voltage level, or a current level.

Example 94 is the method of any one of examples 85 to 93, wherein the executing the handshake comprises following a near-field communication protocol (e.g., Bluetooth) with object, wherein the response message includes a profile of the object (e.g., a Bluetooth profile).

Example 95 is the method of any one of examples 85 to 94, wherein the wireless charging transmission coil includes a series resonance circuit with a resonance at an operating frequency.

Example 96 is the method of any one of examples 85 to 95, wherein the wireless charging transmission coil includes a multi-layer coil that directs a radiation pattern of the wireless charging transmission coil.

Example 97 is the method of example 96, wherein the radiation pattern is a non-uniform radiation pattern configured to direct more radiation towards the area than is directed away from the area.

Example 98 is the method of either of examples 96 or 97, wherein the multi-layer coil includes at least one metamaterial layer.

Example 99 is the method of example 98, wherein the at least one metamaterial layer is between a protective layer and a coil winding layer or between an adhesive layer and a metallic plate layer.

Example 100 is the method of either of examples 98 or 99, wherein the multi-layer coil includes a protective layer, a first metamaterial layer, a coil winding layer, an adhesive layer, a second metamaterial layer, a metallic plate layer, and a base layer.

Example 101 is the method of example 100, wherein the protective layer is disposed over the first metamaterial layer, the first metamaterial layer is disposed over the coil winding layer, the coil winding layer is disposed over the adhesive layer, the adhesive layer is disposed over the second metamaterial layer, the second metamaterial layer is disposed over the metallic plate layer, and the metallic plate layer is disposed over the base layer.

Example 102 is the method of any one of examples 85 to 101, wherein the charging power profile includes an object identifier of the object, wherein the method further includes determining one or more charging requirements for the object based on the object identifier and controlling the wireless charging transmission coil according to the one or more charging requirements.

Example 103 is the method of example 102, wherein the object identifier includes a Radio Frequency Identification (RFID) message, wherein executing the handshake further includes transmitting (e.g., via an RFID subcircuit) an electromagnetic interrogation pulse, wherein the electromagnetic interrogation pulse is configured to cause the object to transmit the RFID message to the wireless charging platform.

Example 104 is the method of either one of examples 102 or 103, wherein the object identifier includes a medium access control address (MAC ID) that uniquely identifies the obj ect.

Example 105 is the method of any one of examples 85 to 104, the method further includes determining an indication of whether a body part is within a predefined radiation distance from the wireless charging platform and revising the power configuration message by making a charging adjustment to the charging configuration based on the indication.

Example 106 is the method of example 105, wherein the body part includes a human hand.

Example 107 is the method of example 105, wherein making the charging adjustment includes reducing a charging power of the wireless charging transmission coil.

Example 108 is the method of any one of examples 85 to 107, wherein executing the handshake includes receiving the charging power profile as a manual configuration information from a user of the wireless charging platform.

Example 109 is the method of any one of examples 85 to 108, wherein the power configuration message includes a resonance frequency associated with a series resonance circuit of a transmitter coil of the wireless charging platform.

Example 110 is a method for wirelessly charging a chargeable battery of a user device. The method includes detecting if a reception coil of the user device is located within a predefined distance from a transmission coil of a wireless charging station, wherein the transmission coil and the reception coil each include a resonant series circuit configured to operate at a resonate frequency. The method also includes initiating a negotiation protocol for receiving a charging profile associated with the user device. The method also includes determining a transmission coil configuration for the transmission coil based on the charging profile. The method also includes controlling the transmission coil based on the transmission coil configuration.

Example 111 is the method of example 110, wherein controlling the transmission coil based on the transmission coil configuration includes controlling a transmission power of the transmission coil according to the transmission coil configuration in order to deliver power to the reception coil of the user device.

Example 112 is the method of any one of examples 110 to 111, wherein initiating the negotiation protocol includes broadcasting a request for receiving the charging profile, receiving the charging profile, and determining at least one charging requirement for the user device based on the charging profile.

Example 113 is the method of example 112, wherein the request includes a number (e.g., a random number) that uniquely identifies the user device.

Example 114 is the method of any one of examples 113 to 113, wherein the charging profile further includes the number.

Example 115 is the method of any one of examples 110 to 114, the method further including detecting whether the user device is within a predefined distance from the wireless charging station based on an impedance change.

Example 116 is the method of any one of examples 110 to 115, wherein the charging transmission coil is one of a plurality of transmission coils, each associated with at least one of a plurality of charging areas.

Example 117 is the method of example 116, wherein the method further includes detecting (e.g., via a sensor) which area of the plurality of charging areas is the area in which the user device is within the predefined distance.

Example 118 is the method of any one of examples 113 to 117, wherein the at least one charging requirement includes at least one of a power rating, a power level, a power category, a resonant frequency, a maximum charge time, a voltage level, or a current level.

Example 119 is the method of any one of examples 110 to 118, wherein initiating the negotiation protocol includes operating a wireless transceiver according to a near-field communication protocol (e.g., Bluetooth) to receive the charging profile in a response message, wherein the response message includes a profile of the object (e.g., a Bluetooth profile).

Example 120 is the method of any one of examples 110 to 119, wherein the transmission coil and/or the reception coil includes a series resonance circuit with a resonance at an operating frequency.

Example 121 is the method of any one of examples 110 to 120, wherein the transmission coil includes a multi-layer transmission coil that directs a radiation pattern of the transmission coil and/or the reception coil includes a multi-layer reception coil that directs a gain pattern of the reception coil.

Example 122 is the method of example 121, wherein the radiation pattern is a non-uniform radiation pattern configured to direct more radiation towards the user device than is directed away from the user device and/or the gain pattern is a non-uniform gain pattern configured to gain more radiation in a direction of the transmission coil than is directed away from the direction.

Example 123 is the method of either of examples 121 or 122, wherein the multi-layer transmission coil and/or multi-layer reception coil includes at least one metamaterial layer.

Example 124 is the method of example 123, wherein the at least one metamaterial layer is between a protective layer and a coil winding layer or between an adhesive layer and a metallic plate layer.

Example 125 is the method of either of examples 123 or 124, wherein the multi-layer transmission coil and/or multi-layer reception coil includes a protective layer, a first metamaterial layer, a coil winding layer, an adhesive layer, a second metamaterial layer, a metallic plate layer, and a base layer.

Example 126 is the method of example 125, wherein the protective layer is disposed over the first metamaterial layer, the first metamaterial layer is disposed over the coil winding layer, the coil winding layer is disposed over the adhesive layer, the adhesive layer is disposed over the second metamaterial layer, the second metamaterial layer is disposed over the metallic plate layer, and the metallic plate layer is disposed over the base layer.

Example 127 is the method of any one of examples 130 to 126, wherein the charging profile includes an object identifier of the user device, wherein the method further includes determining the transmission coil configuration based on the object identifier.

Example 128 is the method of example 127, wherein the object identifier includes a Radio Frequency Identification (RFID) message, wherein initiating the negotiation protocol further includes transmitting (e.g., via an RFID subcircuit) an electromagnetic interrogation pulse, wherein the electromagnetic interrogation pulse is configured to cause the user device to transmit the RFID message as the charging profile to the wireless charging platform.

Example 129 is the method of either one of examples 127 or 128, wherein the object identifier includes a medium access control address (MAC ID) that uniquely identifies the user device.

Example 130 is the method of any one of examples 110 to 129, wherein the method further includes determining an indication of whether a body part is within a predefined radiation distance from the wireless charging station. The method further includes revising the transmission coil configuration by making a charging adjustment to the transmission coil configuration based on the indication.

Example 131 is the method of example 130, wherein the body part includes a human hand.

Example 132 is the method of either one of examples 130 or 131, wherein making the charging adjustment includes reducing a charging power of the transmission coil.

Example 133 is the method of any one of examples 110 to 132, wherein initiating the negotiation protocol includes receiving at the wireless charging station the charging profile as a manual configuration information from a user of the wireless charging station and/or user device.

Example 134 is the method of any one of examples 110 to 133, wherein the transmission coil configuration includes a resonance frequency associated with a series resonance circuit of the transmitter coil and/or of the reception coil.

Example 135 is a is a non-transitory computer readable medium that includes instructions, which if executed, cause one or more processors to determine, if a proximity status indicates an object is within a predefined charging distance from a wireless charging platform, a charging configuration for wirelessly charging the object, wherein the charging configuration is determined based on a wireless handshake protocol between the wireless charging platform and the object. The instructions also cause the one or more processors to generate a power configuration message to configure the wireless charging platform according to the charging configuration for the object.

Example 136 is the non-transitory computer readable medium of example 135, wherein the wireless handshake protocol includes that the instructions also cause the one or more processors to receive an object identifier of the object and to determine one or more charging requirements for the object based on the object identifier.

Example 137 is the non-transitory computer readable medium of example 136, wherein the object identifier includes a Radio Frequency Identification (RFID) message, wherein the handshake protocol further includes that the instructions also cause the one or more processors to transmit (e.g., via an RFID circuit) an electromagnetic interrogation pulse, wherein the electromagnetic interrogation pulse is configured to cause the object to transmit the RFID message to the wireless charging platform.

Example 138 is the non-transitory computer readable medium of either one of examples 136 or 137, wherein the object identifier includes a medium access control address (MAC ID) that uniquely identifies the object.

Example 139 is the non-transitory computer readable medium of any one of examples 136 to 138, wherein the wireless charging platform includes a transmission coil for wirelessly transmitting power to a reception coil of the object.

Example 140 is the non-transitory computer readable medium of any one of examples 137 to 139, wherein the wireless handshake protocol includes that the instructions also cause the one or more processors to wirelessly transmit (e.g., via a transceiver) a broadcast message requesting the charging configuration. The instructions also cause the one or more processors to wirelessly receive (e.g. via a transceiver) a response message from the object, wherein the response message includes the charging configuration.

Example 141 is the non-transitory computer readable medium of example 140, wherein the broadcast message includes a number (e.g., a random number) that uniquely identifies the object from other objects within the predefined distance to the wireless charging platform.

Example 142 is the non-transitory computer readable medium of example 141, wherein the response message further includes the number.

Example 143 is the non-transitory computer readable medium of any one of examples 140 to 142, wherein the broadcast message includes a descriptor table of one or more charging requirements of the charging configuration, wherein the response message includes the one or more charging requirements for the object or an object identifier that uniquely identifies the object.

Example 144 is the non-transitory computer readable medium of example 143, wherein the one or more charging requirements includes at least one of a power rating, a power level, a power category, a resonant frequency, a maximum charge time, a voltage level, or a current level.

Example 145 is the non-transitory computer readable medium of any one of examples 140 to 144, wherein the non-transitory computer readable medium further includes a wireless transceiver, wherein the instructions that cause the one or more processors to transmit the broadcast message and to receive the response message includes that the instructions also cause the one or more processors to wirelessly transmit via the transceiver the broadcast message and to wirelessly receive via the transceiver the response message.

Example 146 is the non-transitory computer readable medium of example 145, wherein the wireless transceiver is configured to operate according to a near-field communication protocol (e.g., Bluetooth) and the response message includes a profile of the object (e.g., a Bluetooth profile).

Example 147 is the non-transitory computer readable medium of any one of examples 135 to 146, wherein the instructions also cause the one or more processors to receive an indication of whether a body part is within a predefined radiation distance from the wireless charging platform. The instructions also cause the one or more processors to revise the power configuration message with a charging adjustment to the charging configuration based on the indication.

Example 148 is the non-transitory computer readable medium of example 147, wherein the body part includes a human hand.

Example 149 is the non-transitory computer readable medium of either one of examples 147 or 148, wherein the charging adjustment includes a reduction in a charging power for the wireless charging platform.

Example 150 is the non-transitory computer readable medium of any one of examples 135 to 149, wherein the wireless handshake protocol includes that the instructions also cause the one or more processors to receive the charging configuration as a manual configuration information from a user of the wireless charging platform.

Example 151 is the non-transitory computer readable medium of any one of examples 135 to 150, wherein the power configuration message includes a resonance frequency associated with a series resonance circuit of a transmitter coil of the wireless charging platform.

Example 152 is a non-transitory computer readable medium that includes instructions, which if executed, cause one or more processors to detect whether an object is within a predefined distance from an area on a wireless charging platform associated with a wireless charging transmission coil. The instructions also cause the one or more processors to receive, based on whether the object is within the predefined distance, a charging power profile for the object that is based on a handshake with the object. The instructions also cause the one or more processors to control the wireless charging transmission coil according to the charging power profile.

Example 153 is the non-transitory computer readable medium of example 152, wherein the handshake includes a communication protocol for communication between the wireless charging platform and the object, wherein the communication protocol includes that the instructions also cause the one or more processors to broadcast a request for the charging power profile and to receive at least one charging requirement of the charging power profile that is responsive to the request.

Example 154 is the non-transitory computer readable medium of example 153, wherein the request includes a number (e.g., a random number) that uniquely identifies the object from other objects within the predefined distance to the wireless charging platform.

Example 155 is the non-transitory computer readable medium of either of examples 152 or 154, wherein the charging requirement further includes the number.

Example 156 is the non-transitory computer readable medium of any one of examples 152 to 155, wherein the instructions also cause the one or more processors to detect whether the object is within the predefined distance from the area based on an impedance change.

Example 157 is the non-transitory computer readable medium of any one of examples 152 to 156, wherein the wireless charging transmission coil is one of a plurality of wireless charging transmission coils and the area is one of a plurality of charging areas, wherein each one of the plurality of charging areas corresponds to at least one of the plurality of wireless charging transmission coils.

Example 158 is the non-transitory computer readable medium of example 157, wherein the instructions also cause the one or more processors to (e.g., via a sensor) detect which of the plurality of charging areas is the area where the object is within the predefined distance.

Example 159 is the non-transitory computer readable medium of any one of examples 152 to 158, wherein the charging power profile includes one or more charging requirements or wherein the instructions also cause the one or more processors to determine the one or more charging requirements based on the charging power profile.

Example 160 is the non-transitory computer readable medium of example 159, wherein the one or more charging requirements includes at least one of a power rating, a power level, a power category, a resonant frequency, a maximum charge time, a voltage level, or a current level.

Example 161 is the non-transitory computer readable medium of any one of examples 152 to 160, wherein the instructions that cause the one or more processors to receive the charging power profile based on the handshake includes that the instructions also cause the one or more processors to operate a wireless transceiver according to a near-field communication protocol (e.g., Bluetooth), wherein the response message includes a profile of the object (e.g., a Bluetooth profile).

Example 162 is the non-transitory computer readable medium of any one of examples 152 to 161, wherein the wireless charging transmission coil includes a series resonance circuit with a resonance at an operating frequency.

Example 163 is the non-transitory computer readable medium of any one of examples 152 to 162, wherein the wireless charging transmission coil includes a multi-layer coil that directs a radiation pattern of the wireless charging transmission coil.

Example 164 is the non-transitory computer readable medium of example 163, wherein the radiation pattern is a non-uniform radiation pattern configured to direct more radiation towards the area than is directed away from the area.

Example 165 is the non-transitory computer readable medium of either of examples 163 or 164, wherein the multi-layer coil includes at least one metamaterial layer.

Example 166 is the non-transitory computer readable medium of example 165, wherein the at least one metamaterial layer is between a protective layer and a coil winding layer or between an adhesive layer and a metallic plate layer.

Example 167 is the non-transitory computer readable medium of either of examples 165 or 166, wherein the multi-layer coil includes a protective layer, a first metamaterial layer, a coil winding layer, an adhesive layer, a second metamaterial layer, a metallic plate layer, and a base layer.

Example 168 is the non-transitory computer readable medium of example 167, wherein the protective layer is disposed over the first metamaterial layer, the first metamaterial layer is disposed over the coil winding layer, the coil winding layer is disposed over the adhesive layer, the adhesive layer is disposed over the second metamaterial layer, the second metamaterial layer is disposed over the metallic plate layer, and the metallic plate layer is disposed over the base layer.

Example 169 is the non-transitory computer readable medium of any one of examples 152 to 168, wherein the charging power profile includes an object identifier of the object, wherein the instructions also cause the one or more processors to determine one or more charging requirements for the object based on the object identifier, wherein the instructions also cause the one or more processors to control the wireless charging transmission coil according to the one or more charging requirements.

Example 170 is the non-transitory computer readable medium of example 169, wherein the object identifier includes a Radio Frequency Identification (RFID) message, wherein the handshake further includes that the instructions also cause the one or more processors to transmit (e.g., via an RFID subcircuit) an electromagnetic interrogation pulse, wherein the electromagnetic interrogation pulse is configured to cause the object to transmit the RFID message to the wireless charging platform.

Example 171 is the non-transitory computer readable medium of either one of examples 169 or 170, wherein the object identifier includes a medium access control address (MAC ID) that uniquely identifies the object.

Example 172 is the non-transitory computer readable medium of any one of examples 152 to 171, wherein the instructions also cause the one or more processors to determine an indication of whether a body part is within a predefined radiation distance from the wireless charging platform, wherein the instructions also cause the one or more processors to revise the power configuration message with a charging adjustment to the charging configuration based on the indication.

Example 173 is the non-transitory computer readable medium of example 172, wherein the body part includes a human hand.

Example 174 is the non-transitory computer readable medium of example 172, wherein the charging adjustment includes a reduction in a charging power for the wireless charging transmission coil.

Example 175 is the non-transitory computer readable medium of any one of examples 152 to 174, wherein the handshake includes that the instructions also cause the one or more processors to receive the charging power profile as a manual configuration information from a user of the wireless charging platform.

Example 176 is the non-transitory computer readable medium of any one of examples 152 to 175, wherein the power configuration message includes a resonance frequency associated with a series resonance circuit of a transmitter coil of the wireless charging platform.

Example 177 is a non-transitory computer readable medium for wirelessly charging a chargeable battery of a user device from a wireless charging station that includes a transmission coil, wherein the user device includes a wireless a reception coil, wherein the transmission coil and the reception coil each include a resonant series circuit configured to operate at a resonate frequency, wherein the non-transitory computer readable medium includes instructions, which if executed, cause one or more processors to detecting if the reception coil is located within a predefined distance from the transmission coil. The instructions also cause the one or more processors to initiate a negotiation protocol for receiving a charging profile associated with the user device. The instructions also cause the one or more processors to determine a transmission coil configuration for the transmission coil based on the charging profile. The instructions also cause the one or more processors to control the transmission coil based on the transmission coil configuration.

Example 178 is the non-transitory computer readable medium of example 177, wherein the instructions that cause the one or more processors to control the transmission coil based on the transmission coil configuration includes that the instructions also cause the one or more processors to control a transmission power of the transmission coil according to the transmission coil configuration in order to deliver power to the reception coil of the user device.

Example 179 is the non-transitory computer readable medium of any one of examples 177 to 178, wherein the instructions that cause the one or more processors to initiate the negotiation protocol includes that the instructions also cause the one or more processors to broadcasting a request for receiving the charging profile and determining at least one charging requirement for the user device based on the charging profile.

Example 180 is the non-transitory computer readable medium of example 179, wherein the request includes a number (e.g., a random number) that uniquely identifies the user device.

Example 181 is the non-transitory computer readable medium of any one of examples 180 to 180, wherein the charging profile further includes the number.

Example 182 is the non-transitory computer readable medium of any one of examples 177 to 181, wherein the instructions also cause the one or more processors to detect whether the user device is within a predefined distance from the wireless charging station based on an impedance change.

Example 183 is the non-transitory computer readable medium of any one of examples 177 to 182, wherein the charging transmission coil is one of a plurality of transmission coils, each associated with at least one of a plurality of charging areas.

Example 184 is the non-transitory computer readable medium of example 183, wherein the instructions also cause the one or more processors to detect (e.g., via a sensor) which area of the plurality of charging areas is the area in which the user device is within the predefined distance.

Example 185 is the non-transitory computer readable medium of any one of examples 180 to 184, wherein the at least one charging requirement includes at least one of a power rating, a power level, a power category, a resonant frequency, a maximum charge time, a voltage level, or a current level.

Example 186 is the non-transitory computer readable medium of any one of examples 177 to 185, wherein the instructions that cause the one or more processors to initiate the negotiation protocol includes that the instructions also cause the one or more processors to operate a wireless transceiver according to a near-field communication protocol (e.g., Bluetooth) to receive the charging profile in a response message, wherein the response message includes a profile of the object (e.g., a Bluetooth profile).

Example 187 is the non-transitory computer readable medium of any one of examples 177 to 186, wherein the transmission coil and/or the reception coil includes a series resonance circuit with a resonance at an operating frequency.

Example 188 is the non-transitory computer readable medium of any one of examples 177 to 187, wherein the transmission coil includes a multi-layer transmission coil that directs a radiation pattern of the transmission coil and/or the reception coil includes a multi-layer reception coil that directs a gain pattern of the reception coil.

Example 189 is the non-transitory computer readable medium of example 188, wherein the radiation pattern is a non-uniform radiation pattern configured to direct more radiation towards the user device than is directed away from the user device and/or the gain pattern is a non-uniform gain pattern configured to gain more radiation in a direction of the transmission coil than is directed away from the direction.

Example 190 is the non-transitory computer readable medium of either of examples 188 or 189, wherein the multi-layer transmission coil and/or multi-layer reception coil includes at least one metamaterial layer.

Example 191 is the non-transitory computer readable medium of example 190, wherein the at least one metamaterial layer is between a protective layer and a coil winding layer or between an adhesive layer and a metallic plate layer.

Example 192 is the non-transitory computer readable medium of either of examples 190 or 191, wherein the multi-layer transmission coil and/or multi-layer reception coil includes a protective layer, a first metamaterial layer, a coil winding layer, an adhesive layer, a second metamaterial layer, a metallic plate layer, and a base layer.

Example 193 is the non-transitory computer readable medium of example 192, wherein the protective layer is disposed over the first metamaterial layer, the first metamaterial layer is disposed over the coil winding layer, the coil winding layer is disposed over the adhesive layer, the adhesive layer is disposed over the second metamaterial layer, the second metamaterial layer is disposed over the metallic plate layer, and the metallic plate layer is disposed over the base layer.

Example 194 is the non-transitory computer readable medium of any one of examples 197 to 193, wherein the charging profile includes an object identifier of the user device, wherein the instructions also cause the one or more processors to determine the transmission coil configuration based on the object identifier.

Example 195 is the non-transitory computer readable medium of example 194, wherein the object identifier includes a Radio Frequency Identification (RFID) message, wherein the instructions that cause the one or more processors to initiate the negotiation protocol further includes that the instructions also cause the one or more processors to transmit (e.g., via an RFID subcircuit) an electromagnetic interrogation pulse, wherein the electromagnetic interrogation pulse is configured to cause the user device to transmit the RFID message as the charging profile to the wireless charging platform.

Example 196 is the non-transitory computer readable medium of either one of examples 194 or 195, wherein the object identifier includes a medium access control address (MAC ID) that uniquely identifies the user device.

Example 197 is the non-transitory computer readable medium of any one of examples 177 to 196, wherein the instructions also cause the one or more processors to determine an indication of whether a body part is within a predefined radiation distance from the wireless charging station. The instructions also cause the one or more processors to revise the transmission coil configuration with a charging adjustment to the transmission coil configuration based on the indication.

Example 198 is the non-transitory computer readable medium of example 197, wherein the body part includes a human hand.

Example 199 is the non-transitory computer readable medium of either one of examples 197 or 198, wherein the charging adjustment includes a reduction in a charging power of the transmission coil.

Example 200 is the non-transitory computer readable medium of any one of examples 177 to 199, wherein the instructions that cause the one or more processors to initiate the negotiation protocol includes that the instructions also cause the one or more processors to receive at the wireless charging station the charging profile as a manual configuration information from a user of the wireless charging station and/or user device.

Example 201 is the non-transitory computer readable medium of any one of examples 177 to 200, wherein the transmission coil configuration includes a resonance frequency associated with a series resonance circuit of the transmitter coil and/or of the reception coil.

Example 202 is a device including a means for determining, if a proximity status indicates an object is within a predefined charging distance from a wireless charging means, a charging configuration for wirelessly charging the object, wherein the charging configuration is based on a wireless handshake protocol between the wireless charging means and the object. The device also includes a means for executing the wireless handshake protocol. The device also includes a means for generating a power configuration message to configure the wireless charging means according to the charging configuration for the object.

Example 203 is the device of example 202, wherein the executing the wireless handshake protocol includes a means for receiving an object identifier of the object and a means for determining one or more charging requirements for the object based on the object identifier.

Example 204 is the device of example 203, wherein the object identifier includes a Radio Frequency Identification (RFID) message, wherein the means for executing the handshake protocol further includes a means for transmitting (e.g., via an RFID circuit) an electromagnetic interrogation pulse, wherein the electromagnetic interrogation pulse is configured to cause the object to transmit the RFID message to the wireless charging means.

Example 205 is the device of either one of examples 203 or 204, wherein the object identifier includes a medium access control address (MAC ID) that uniquely identifies the obj ect.

Example 206 is the device of any one of examples 203 to 205, wherein the wireless charging means includes a transmission coil for wirelessly transmitting power to a reception coil of the object.

Example 207 is the device of any one of examples 204 to 206, wherein the means for executing the wireless handshake protocol includes a means for wirelessly transmitting a broadcast message requesting the charging configuration. The means for executing the wireless handshake protocol further includes a means for wirelessly receiving a response message from the object, wherein the response message includes the charging configuration.

Example 208 is the device of example 207, wherein the broadcast message includes a number (e.g., a random number) that uniquely identifies the object from other objects within the predefined distance to the wireless charging means.

Example 209 is the device of example 208, wherein the response message further includes the number.

Example 210 is the device of any one of examples 207 to 209, wherein the broadcast message includes a descriptor table of one or more charging requirements of the charging configuration, wherein the response message includes the one or more charging requirements for the object or an object identifier that uniquely identifies the object.

Example 211 is the device of example 210, wherein the one or more charging requirements includes at least one of a power rating, a power level, a power category, a resonant frequency, a maximum charge time, a voltage level, or a current level.

Example 212 is the device of any one of examples 207 to 211, wherein the means for wirelessly transmitting comprises a transceiver and wherein the means for wirelessly receiving comprises the transceiver.

Example 213 is the device of example 212, wherein the means for wirelessly transmitting and the means for the wirelessly receiving comprises a means for operating according to a near-field communication protocol (e.g., Bluetooth), wherein the response message includes a profile of the object (e.g., a Bluetooth profile).

Example 214 is the device of any one of examples 202 to 213, the device further including a means for receiving an indication of whether a body part is within a predefined radiation distance from the wireless charging means. The device also includes a means for revising the power configuration message with a charging adjustment to the charging configuration based on the indication.

Example 215 is the device of example 214, wherein the body part includes a human hand.

Example 216 is the device of either one of examples 214 or 215, wherein the charging adjustment includes an adjustment to a charging power of the wireless charging means.

Example 217 is the device of any one of examples 202 to 216, wherein the means for executing the wireless handshake protocol further includes a means for receiving the charging configuration as a manual configuration information from a user of the wireless charging means.

Example 218 is the device of any one of examples 202 to 217, wherein the power configuration message includes a resonance frequency associated with a series resonance circuit of a transmitter coil of the wireless charging means.

Example 219 is an apparatus that includes a means for detecting whether an object is within a predefined distance from an area on a wireless charging means associated with a wireless charging transmission coil. The apparatus also includes a means for receiving, based on whether the object is within the predefined distance, a charging power profile for the object that is based on a means for executing a handshake with the object. The apparatus also includes a means for controlling the wireless charging transmission coil according to the charging power profile.

Example 220 is the apparatus of example 219, wherein the means for executing the handshake includes a means for executing a communication protocol for communication between the wireless charging means and the object, wherein the means for executing the communication protocol includes a means for broadcasting a request for the charging power profile and a means for receiving at least one charging requirement of the charging power profile that is responsive to the request.

Example 221 is the apparatus of example 220, wherein the request includes a number (e.g., a random number) that uniquely identifies the object from other objects within the predefined distance to the wireless charging means.

Example 222 is the apparatus of either of examples 219 or 221, wherein the charging requirement further includes the number.

Example 223 is the apparatus of any one of examples 219 to 222, the apparatus further including a means for detecting whether the object is within the predefined distance from the area based on an impedance change.

Example 224 is the apparatus of any one of examples 219 to 223, wherein the wireless charging transmission coil is one of a plurality of wireless charging transmission coils and the area is one of a plurality of charging areas, wherein each one of the plurality of charging areas corresponds to at least one of the plurality of wireless charging transmission coils.

Example 225 is the apparatus of example 224, the apparatus further including a means for detecting (e.g., via a sensor) which of the plurality of charging areas is the area where the object is within the predefined distance.

Example 226 is the apparatus of any one of examples 219 to 225, wherein the charging power profile includes one or more charging requirements or the apparatus further includes a means for determining the one or more charging requirements based on the charging power profile.

Example 227 is the apparatus of example 226, wherein the one or more charging requirements includes at least one of a power rating, a power level, a power category, a resonant frequency, a maximum charge time, a voltage level, or a current level.

Example 228 is the apparatus of any one of examples 219 to 227, wherein the means for executing the handshake comprises following a near-field communication protocol (e.g., Bluetooth) with object to receive the charging power profile in a response message, wherein the response message includes a profile of the object (e.g., a Bluetooth profile).

Example 229 is the apparatus of any one of examples 219 to 228, wherein the wireless charging transmission coil includes a series resonance circuit with a resonance at an operating frequency.

Example 230 is the apparatus of any one of examples 219 to 229, wherein the wireless charging transmission coil includes a multi-layer coil that directs a radiation pattern of the wireless charging transmission coil.

Example 231 is the apparatus of example 230, wherein the radiation pattern is a non-uniform radiation pattern configured to direct more radiation towards the area than is directed away from the area.

Example 232 is the apparatus of either of examples 230 or 231, wherein the multi-layer coil includes at least one metamaterial layer.

Example 233 is the apparatus of example 232, wherein the at least one metamaterial layer is between a protective layer and a coil winding layer or between an adhesive layer and a metallic plate layer.

Example 234 is the apparatus of either of examples 232 or 233, wherein the multi-layer coil includes a protective layer, a first metamaterial layer, a coil winding layer, an adhesive layer, a second metamaterial layer, a metallic plate layer, and a base layer.

Example 235 is the apparatus of example 234, wherein the protective layer is disposed over the first metamaterial layer, the first metamaterial layer is disposed over the coil winding layer, the coil winding layer is disposed over the adhesive layer, the adhesive layer is disposed over the second metamaterial layer, the second metamaterial layer is disposed over the metallic plate layer, and the metallic plate layer is disposed over the base layer.

Example 236 is the apparatus of any one of examples 219 to 235, wherein the charging power profile includes an object identifier of the object, wherein the apparatus further includes a means for determining one or more charging requirements for the object based on the object identifier and a means for controlling the wireless charging transmission coil according to the one or more charging requirements.

Example 237 is the apparatus of example 236, wherein the obj ect identifier includes a Radio Frequency Identification (RFID) message, wherein the means for executing the handshake further includes a means for transmitting (e.g., via an RFID subcircuit) an electromagnetic interrogation pulse, wherein the electromagnetic interrogation pulse is configured to cause the object to transmit the RFID message to the wireless charging means.

Example 238 is the apparatus of either one of examples 236 or 237, wherein the object identifier includes a medium access control address (MAC ID) that uniquely identifies the object.

Example 239 is the apparatus of any one of examples 219 to 238, the apparatus further includes a means for determining an indication of whether a body part is within a predefined radiation distance from the wireless charging means and a means for revising the power configuration message with a charging adjustment to the charging configuration based on the indication.

Example 240 is the apparatus of example 239, wherein the body part includes a human hand.

Example 241 is the apparatus of example 239, wherein the charging adjustment includes a reduction to a charging power of the wireless charging transmission coil.

Example 242 is the apparatus of any one of examples 219 to 241, wherein the means for executing the handshake includes a means for receiving the charging power profile as a manual configuration information from a user of the wireless charging means.

Example 243 is the apparatus of any one of examples 219 to 242, wherein the power configuration message includes a resonance frequency associated with a series resonance circuit of a transmitter coil of the wireless charging means.

Example 244 is a device for wirelessly charging a chargeable battery of a user device from a wireless charging station that includes a transmission coil, wherein the user device includes a wireless a reception coil, wherein the transmission coil and the reception coil each include a resonant series circuit configured to operate at a resonate frequency. The device includes a means for detecting if the reception coil is located within a predefined distance from the transmission coil. The device also includes a means for initiating a negotiation protocol for receiving a charging profile associated with the user device. The device also includes a means for determining a transmission coil configuration for the transmission coil based on the charging profile. The device also includes a means for controlling the transmission coil based on the transmission coil configuration.

Example 245 is the device of example 244, wherein the means for controlling the transmission coil based on the transmission coil configuration includes a means for controlling a transmission power of the transmission coil according to the transmission coil configuration in order to deliver power to the reception coil of the user device.

Example 246 is the device of any one of examples 244 to 245, wherein the means for initiating the negotiation protocol includes broadcasting a request for receiving the charging profile and determining at least one charging requirement for the user device based on the charging profile.

Example 247 is the device of example 246, wherein the request includes a number (e.g., a random number) that uniquely identifies the user device.

Example 248 is the device of any one of examples 247 to 247, wherein the charging profile further includes the number.

Example 249 is the device of any one of examples 244 to 248, the device further including a means for detecting whether the user device is within a predefined distance from the wireless charging station based on an impedance change.

Example 250 is the device of any one of examples 244 to 249, wherein the charging transmission coil is one of a plurality of transmission coils, each associated with at least one of a plurality of charging areas.

Example 251 is the device of example 250, wherein the device further includes a means for detecting (e.g., via a sensor) which area of the plurality of charging areas is the area in which the user device is within the predefined distance.

Example 252 is the device of any one of examples 247 to 251, wherein the at least one charging requirement includes at least one of a power rating, a power level, a power category, a resonant frequency, a maximum charge time, a voltage level, or a current level.

Example 253 is the device of any one of examples 244 to 252, wherein the means for initiating the negotiation protocol includes a means for operating a wireless transceiver according to a near-field communication protocol (e.g., Bluetooth) to receive the charging profile in a response message, wherein the response message includes a profile of the object (e.g., a Bluetooth profile).

Example 254 is the device of any one of examples 244 to 253, wherein the transmission coil and/or the reception coil includes a series resonance circuit with a resonance at an operating frequency.

Example 255 is the device of any one of examples 244 to 254, wherein the transmission coil includes a multi-layer transmission coil that directs a radiation pattern of the transmission coil and/or the reception coil includes a multi-layer reception coil that directs a gain pattern of the reception coil.

Example 256 is the device of example 255, wherein the radiation pattern is a non-uniform radiation pattern configured to direct more radiation towards the user device than is directed away from the user device and/or the gain pattern is a non-uniform gain pattern configured to gain more radiation in a direction of the transmission coil than is directed away from the direction.

Example 257 is the device of either of examples 255 or 256, wherein the multi-layer transmission coil and/or multi-layer reception coil includes at least one metamaterial layer.

Example 258 is the device of example 257, wherein the at least one metamaterial layer is between a protective layer and a coil winding layer or between an adhesive layer and a metallic plate layer.

Example 259 is the device of either of examples 257 or 258, wherein the multi-layer transmission coil and/or multi-layer reception coil includes a protective layer, a first metamaterial layer, a coil winding layer, an adhesive layer, a second metamaterial layer, a metallic plate layer, and a base layer.

Example 260 is the device of example 259, wherein the protective layer is disposed over the first metamaterial layer, the first metamaterial layer is disposed over the coil winding layer, the coil winding layer is disposed over the adhesive layer, the adhesive layer is disposed over the second metamaterial layer, the second metamaterial layer is disposed over the metallic plate layer, and the metallic plate layer is disposed over the base layer.

Example 261 is the device of any one of examples 264 to 260, wherein the charging profile includes an object identifier of the user device, wherein the device further includes a means for determining the transmission coil configuration based on the object identifier.

Example 262 is the device of example 261, wherein the object identifier includes a Radio Frequency Identification (RFID) message, wherein the means for initiating the negotiation protocol further includes a means for transmitting (e.g., via an RFID subcircuit) an electromagnetic interrogation pulse, wherein the electromagnetic interrogation pulse is configured to cause the user device to transmit the RFID message as the charging profile to the wireless charging means.

Example 263 is the device of either one of examples 261 or 262, wherein the object identifier includes a medium access control address (MAC ID) that uniquely identifies the user device.

Example 264 is the device of any one of examples 244 to 263, wherein the device further includes a means for determining an indication of whether a body part is within a predefined radiation distance from the wireless charging station. The device further includes a means for revising the transmission coil configuration with a charging adjustment to the transmission coil configuration based on the indication.

Example 265 is the device of example 264, wherein the body part includes a human hand.

Example 266 is the device of either one of examples 264 or 265, wherein the charging adjustment includes a reduction in a charging power of the transmission coil.

Example 267 is the device of any one of examples 244 to 266, wherein the means for initiating the negotiation protocol includes a means for receiving at the wireless charging station the charging profile as a manual configuration information from a user of the wireless charging station and/or user device.

Example 268 is the device of any one of examples 244 to 267, wherein the transmission coil configuration includes a resonance frequency associated with a series resonance circuit of the transmitter coil and/or of the reception coil.

While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes, which come within the meaning and range of equivalency of the claims, are therefore intended to be embraced.

**Claims**

1. A wireless charging platform comprising:

   a wireless charging transmission coil associated with an area of the wireless charging platform;
   a proximity detector configured to detect whether an object is within a predefined distance from the area of the wireless charging transmission coil;
   a wireless transceiver configured to, based on whether the object is within the predefined distance, receive a charging power profile for the object that is based on a handshake with the object; and
   a control circuit configured to control the wireless charging transmission coil according to the charging power profile.

2. The wireless charging platform of claim 1, wherein the handshake comprises a communication protocol for communication between the wireless charging platform and the object, wherein the communication protocol comprises the wireless charging platform configured to broadcast a request for the charging power profile and to receive at least one charging requirement of the charging power profile that is responsive to the request.

3. The wireless charging platform of either one of claims 1 or 2, wherein the charging power profile comprises an object identifier of the object, wherein the control circuit is further configured to determine at least one charging requirement for the object based on the object identifier, wherein the control circuit is further configured to control the wireless charging transmission coil according to the at least one charging requirement.

4. The wireless charging platform of claim 3, wherein the object identifier comprises a Radio Frequency Identification (RFID) message, wherein the handshake further comprises the wireless transceiver configured to transmit an electromagnetic interrogation pulse, wherein the electromagnetic interrogation pulse is configured to cause the object to transmit the RFID message to the wireless charging platform.

5. The wireless charging platform of claim 2, wherein the request includes a number that uniquely identifies the object from other objects within the predefined distance to the wireless charging platform, wherein optionally the number is a random number, wherein optionally the at least one charging requirement further comprises the number.

6. The wireless charging platform of any one of claims 2 to 5, wherein the at least one charging requirements comprises at least one of a power rating, a power level, a power category, a resonant frequency, a maximum charge time, a voltage level, or a current level.

7. The wireless charging platform of any one of claims 1 to 6, wherein the proximity detector is configured to detect whether the object is within the predefined distance from the area based on an impedance change.

8. The wireless charging platform of any one of claims 1 to 7, wherein the wireless charging transmission coil comprises one of a plurality of wireless charging transmission coils and the area comprises one of a plurality of charging areas, wherein each one of the plurality of charging areas corresponds to at least one of the plurality of wireless charging transmission coils.

9. The wireless charging platform of any one of claims 1 to 8, wherein the wireless charging transmission coil comprises a series resonance circuit with a resonance at an operating frequency.

10. The wireless charging platform of any one of claims 1 to 9, wherein the wireless charging transmission coil includes a multi-layer coil that directs a radiation pattern of the wireless charging transmission coil, wherein optionally the radiation pattern is a non-uniform radiation pattern configured to direct more radiation towards the area than is directed away from the area.

11. The wireless charging platform of claim 10, wherein the multi-layer coil includes at least one metamaterial layer, wherein optionally the at least one metamaterial layer is between a protective layer and a coil winding layer or between an adhesive layer and a metallic plate layer.

12. The wireless charging platform of any one of claims 1 to 11, wherein the proximity detection circuit is further configured to determine an indication of whether a body part is within a predefined radiation distance from the wireless charging platform, wherein the control circuit is further configured to revise the power configuration message with a charging adjustment to the charging configuration based on the indication.

13. A method for wirelessly charging a chargeable battery of a user device, the method comprising:

   detecting if a reception coil of the user device is located within a predefined distance from a transmission coil of a wireless charging station, wherein the transmission coil and the reception coil each include a resonant series circuit configured to operate at a resonate frequency;
   initiating a negotiation protocol for receiving a charging profile associated with the user device;
   determining a transmission coil configuration for the transmission coil based on the charging profile; and
   controlling the transmission coil based on the transmission coil configuration.

14. The method of claim 13, wherein initiating the negotiation protocol comprises broadcasting a request for receiving the charging profile, receiving the charging profile, and determining at least one charging requirement for the user device based on the charging profile.

15. The method of either one of claims 13 or 14, wherein initiating the negotiation protocol comprises operating a wireless transceiver according to a near-field communication protocol to receive the charging profile in a response message, wherein the response message includes a profile of the object, wherein optionally the near-field communication protocol is a Bluetooth protocol and the profile is a Bluetooth profile.

FIG. 1

EP 4 369 553 A1

EP 4 369 553 A1

220

Control
Circuitry /
Power

230

Magnetic Field

260

250

Battery

FIG. 2

300

340 — Divice to be Charged

Wireless Charging Station/Platform — 310

Device placed on the charging platform ⟶

Sense presence of device

Handshake

⟵ Initiate pairing/Request power profile for charging

Send charging profile/parameters
(If no response, use default or manually-entered.) ⟶

Configure platform based on profile/ parameters

⟵ Start charging; monitor battery level

⟵ Stop charging based on charging threshold; notify user

FIG. 3

FIG. 4

$$\omega_0 = \frac{1}{\sqrt{LC}}$$

$I = \dfrac{V}{Z}$

$R$

$C$

$V$

$L$

500a

FIG. 5A

$$\omega_0 \approx \frac{1}{\sqrt{LC}}$$

$I = \dfrac{V}{Z}$

$R_C$   $R_L$

$V$

$C$   $L$

500b

FIG. 5B

FIG. 6

FIG. 7A

FIG. 7B

810 — Processor

820 — Transmitter

800

815 — Transmission Coil

830 — Receiver

FIG. 8

900

Determining, if a proximity status indicates an object is within a predefined charging distance from a wireless charging platform, a charging configuration for wirelessly charging the object, wherein the charging configuration is based on a wireless handshake protocol between the wireless charging platform and the object. — 910

Executing the wireless handshake protocol. — 920

Generating a power configuration message to configure the wireless charging platform according to the charging configuration for the object. — 930

FIG. 9

1000

Detecting whether an object is within a predefined distance from an area on a wireless charging platform associated with a wireless charging transmission coil. ⟋1010

Receiving, based on whether the object is within the predefined distance, a charging power profile for the object that is based on executing a handshake with the object. 1020

Controlling the wireless charging transmission coil according to the charging power profile 1030

FIG. 10

1100

Detecting if a reception coil of a user device is located within a predefined distance from a transmission coil of a wireless charging station, wherein the reception coil and the transmission coil each include a series resonant circuit configured to operate at a resonant frequency.　　1110

Initiating a negotiation protocol for receiving a charging profile associated with the user device　　1120

Determining a transmission coil configuration for the transmission coil based on the charging profile.　　1130

Controlling the transmission coil based on the transmission coil configuration.　　1140

FIG. 11

Europäisches
Patentamt

European
Patent Office

Office européen
des brevets

# EUROPEAN SEARCH REPORT

Application Number

**EP 22 20 6647**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/096413 A1 (PARTOVI AFSHIN [US] ET AL) 16 April 2009 (2009-04-16) | 1-6, 8-10, 13-15 | INV. H02J7/00 H01F38/14 |
| Y | * the whole document * | 7,11,12 | H02J50/12 H02J50/40 |
| Y | US 2019/148966 A1 (CHOI JUNG WOO [KR] ET AL) 16 May 2019 (2019-05-16) * paragraph [0056] * | 7 | H02J50/80 H02J50/90 H04B5/00 |
| Y | US 2013/264885 A1 (LEE JAE SEUNG [US] ET AL) 10 October 2013 (2013-10-10) * the whole document * | 11 | |
| Y | US 2019/334387 A1 (SWAN PHILIP L [US]) 31 October 2019 (2019-10-31) * the whole document * | 12 | |

TECHNICAL FIELDS
SEARCHED      (IPC)

H02J
H04B
H01F

The present search report has been drawn up for all claims

| Place of search | Date of completion of the search | Examiner |
|---|---|---|
| Munich | 31 March 2023 | Annibal, Stewart |

EPO FORM 1503 03.82 (P04C01)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................
& : member of the same patent family, corresponding
    document

## ANNEX TO THE EUROPEAN SEARCH REPORT
## ON EUROPEAN PATENT APPLICATION NO.

EP 22 20 6647

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2023

| Patent document cited in search report | | Publication date | Patent family member(s) | | Publication date |
|---|---|---|---|---|---|
| US 2009096413 | A1 | 16-04-2009 | CN | 101971453 A | 09-02-2011 |
| | | | CN | 104467129 A | 25-03-2015 |
| | | | EP | 2151037 A1 | 10-02-2010 |
| | | | HK | 1208963 A1 | 18-03-2016 |
| | | | JP | 2010527226 A | 05-08-2010 |
| | | | JP | 2014168380 A | 11-09-2014 |
| | | | US | 2009096413 A1 | 16-04-2009 |
| | | | US | 2012256585 A1 | 11-10-2012 |
| | | | US | 2013175983 A1 | 11-07-2013 |
| | | | US | 2015145475 A1 | 28-05-2015 |
| | | | US | 2016181860 A1 | 23-06-2016 |
| | | | US | 2017194809 A1 | 06-07-2017 |
| | | | WO | 2008137996 A1 | 13-11-2008 |
| US 2019148966 | A1 | 16-05-2019 | CN | 109787657 A | 21-05-2019 |
| | | | KR | 20190054416 A | 22-05-2019 |
| | | | US | 2019148966 A1 | 16-05-2019 |
| US 2013264885 | A1 | 10-10-2013 | NONE | | |
| US 2019334387 | A1 | 31-10-2019 | NONE | | |

EPO FORM P0459

For more details about this annex : see Official Journal of the European Patent Office, No. 12/82